# EUROPEAN PATENT APPLICATION

(11) **EP 3 674 080 A1**
(43) Date of publication of application: **01.07.2020**
(21) Application number: 18864849.7
(22) Date of filing: 01.10.2018
(51) Int. Cl.: B32B 15/08, B29C 45/14, B32B 27/18

(54) **METAL-RESIN COMPOSITE, AND METHOD FOR PRODUCING METAL-RESIN COMPOSITE**

(30) Priority: 03.10.2017 JP 2017193247
(71) Applicant: Mitsubishi Engineering-Plastics Corporation, Tokyo 105-0021 (JP)
(72) Inventor: HIWATASHI, Yuki, Hiratsuka-shi Kanagawa 254-0016 (JP); YAMANAKA, Yasushi, Hiratsuka-shi Kanagawa 254-0016 (JP); UONO, Hiroyuki, Hiratsuka-shi Kanagawa 254-0016 (JP); YAMADA, Ryusuke, Hiratsuka-shi Kanagawa 254-0016 (JP); KIKUCHI, Tatsuya, Hiratsuka-shi Kanagawa 254-0016 (JP)
(74) Representative: Ishiguro, Masaoki
(86) International application number: PCT/JP2018/036642
(87) International publication number: WO 2019/069840

(57) **Abstract**

To provide a metal-resin composite that has high bonding strength (metal bonding strength) between the metal member and the thermoplastic resin member, and excels in platability; and a method for manufacturing the metal-resin composite. The metal-resin composite comprising: a metal member having a laser-treated surface; and a thermoplastic resin member arranged in contact with the metal member on a side having the laser-treated surface, the thermoplastic resin member being composed of a resin composition that contains 1 to 25 parts by mass of a laser direct structuring additive (B), per 100 parts by mass of a thermoplastic resin (A).

## Description

### TECHNICAL FIELD

This invention relates to a metal-resin composite and a method for manufacturing a metal-resin composite, and in particular to a metal-resin composite and so forth, having a thermoplastic resin member on which a plating layer can be formed by laser direct structuring technology.

### BACKGROUND ART

Thermoplastic resins represented by polyester-based resin and polyamide-based resin excel in mechanical strength and moldability, and have therefore been widely used for electric/electronic equipment parts, automotive parts and other electrical components, and mechanical parts. In particular, there are also increasing opportunities in recent years for using a metal-resin composite combining a thermoplastic resin member composed of a thermoplastic resin, and a metal member composed of aluminum, iron or the like.

As one example of such metal-resin composite, Patent Literature 1 discloses a composite molding in which a polybutylene terephthalate resin composition that contains a fibrous reinforcing material and a thermoplastic elastomer, or a modified polybutylene terephthalate resin composition that contains a modified polybutylene terephthalate resin composed of a polybutylene terephthalate/isophthalate copolymer containing 3 to 50 mol% of an isophthalic acid component relative to the total dicarboxylic acid component, and a fibrous reinforcing material, is integrally adhered with a metal (layer) having a micro-roughened surface. Such metal-resin composite, however, raises an issue of bondability between different kinds of members, that is, the thermoplastic resin member and the metal member.

Meanwhile, there has been a demand for forming an antenna with a three-dimensional design on the thermoplastic resin member in recent years. Laser direct structuring (occasionally be referred to as "LDS", hereinafter) technique has attracted attention, as one of a technique for manufacturing a three-dimensional antenna. LDS is a technique for forming a plating layer, typically by irradiating laser on a surface of a resin molding that contains an LDS additive so as to activate it, and by applying a metal to the thus activated area. The technique is featured by capability of manufacturing a metal structure such as antenna, directly on a surface of a resin molding, without using an adhesive or the like.

### CITATION LIST

### PATENT LITERATURE

[Patent Literature 1] JP-A-2009-149018

### SUMMARY OF THE INVENTION

### TECHNICAL PROBLEM

As descried above, the metal-resin composite that contains the metal member and the thermoplastic resin member is occasionally required to have high bondability between the metal member and the thermoplastic resin member, as well as to be acceptable thereon for formation of the plating layer.

This invention is aimed at solving the aforementioned problems, and is to provide a metal-resin composite that has high bonding strength (metal bonding strength) between the metal member and the thermoplastic resin member, and excels in platability; and a method for manufacturing the metal-resin composite.

### SOLUTION TO PROBLEM

The present inventors conducted research to address the above-mentioned problems, and as a result, the problems described above are solved by the following means <1>, and preferably by the following means <2> to <16>.
<1> A metal-resin composite comprising: a metal member having a laser-treated surface; and a thermoplastic resin member arranged in contact with the metal member on a side having the laser-treated surface,
   the thermoplastic resin member being composed of a resin composition that contains 1 to 25 parts by mass of a laser direct structuring additive (B), per 100 parts by mass of a thermoplastic resin (A).
<2> The metal-resin composite of <1>, wherein the thermoplastic resin contains 50% by mass or more of the polyester-based resin (A-1).
<3> The metal-resin composite of <1>, wherein the thermoplastic resin (A) contains 50 to 85% by mass of the polyester-based resin (A-1), and 50 to 15% by mass of the polyamide-based resin (A-2).
<4> The metal-resin composite of any one of <1> to <3>, wherein 40% by mass or more of the thermoplastic resin is composed of a crystalline thermoplastic resin.
<5> The metal-resin composite of <4>, wherein difference (Tm-Tc) between a melting point Tm and a crystallization temperature Tc of the resin composition is 20 to 60°C.
<6> The metal-resin composite of any one of <1> to <5>, wherein the laser direct structuring additive (B) contains at least one of copper, antimony and tin.
<7> The metal-resin composite of any one of <1> to <6>, further comprising a glass-based filler.
<8> The metal-resin composite of any one of <1> to <7>, further comprising a plating layer on a surface of the thermoplastic resin member, and in an area not in contact with the metal member.
<9> The metal-resin composite of any one of <1> to <8>, further comprising an anodizing layer the metal member of the metal-resin composite.
<10> The metal-resin composite of <9>, wherein the thermoplastic resin contains 55% by mass or more of the polyester-based resin (A-1).
<11> The metal-resin composite of any one of <1> to <10>, further comprising a resist layer.
<12> The metal-resin composite of any one of <1> to <11>, wherein the ten-point average roughness Rz on the face of the metal member is 40 to 300 µm.
<13> A method for manufacturing a metal-resin composite, the method comprising:
   treating upon laser to the surface on a metal member and forming a thermoplastic resin member, by applying on a laser-treated surface of the metal member a molten resin composition, the resin composition comprising 1 to 25 parts by mass of a laser direct structuring additive (B), per 100 parts by mass of a thermoplastic resin (A).
<14> The method for manufacturing a metal-resin composite of <13>, wherein the step of applying the molten resin composition to the metal member is conducted by injection molding.
<15> The method for manufacturing a metal-resin composite of <13> or <14>, further comprising forming a plating layer on a surface of the thermoplastic resin member.
<16> The method for manufacturing a metal-resin composite of any one of <13> to <15>, further comprising anodizing.

### ADVANTAGEOUS EFFECTS OF INVENTION

This invention made it possible to provide a metal-resin composite that has high bonding strength (metal bonding strength) between the metal member and the thermoplastic resin member, and excels in platability; and a method for manufacturing the metal-resin composite.

### BRIEF DESCRIPTION OF DRAWINGS

[FIG. 1] A schematic cross-sectional view illustrating an exemplary shape of recess in a metal member of this invention.
[FIG. 2] A schematic cross-sectional view illustrating an exemplary metal-resin composite of this invention.
[FIG. 3] A drawing illustrating a method for measuring bonding strength in Examples.

### DESCRIPTION OF EMBODIMENTS

This invention will be detailed below. Note that all numerical ranges given in this patent specification, using "to" preceded and succeeded by numerals, are used to represent the ranges including these numerals respectively as the lower and upper limit values.

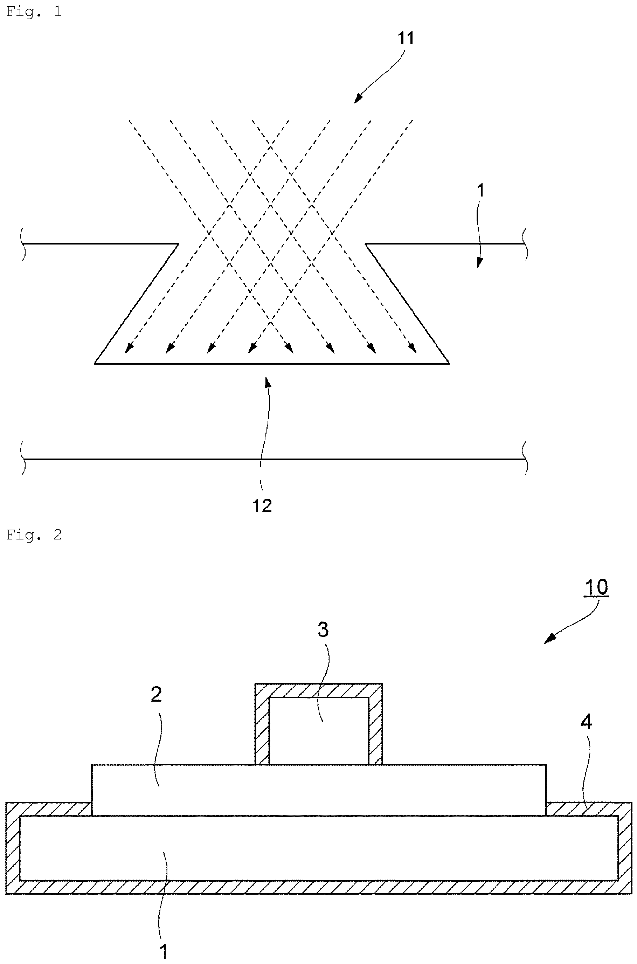

The metal-resin composite of this invention includes a metal member having a laser-treated surface, and a thermoplastic resin member arranged in contact with the metal member on a side having the laser-treated surface, and is featured by that the thermoplastic resin member is composed of a resin composition that contains 1 to 25 parts by mass of a laser direct structuring additive (B), per 100 parts by mass of a thermoplastic resin. With such structure, obtainable is a metal-resin composite that has high bonding strength (metal bonding strength) between the metal member and the thermoplastic resin member, and excels in platability. This is supposedly because, upon laser irradiation 11, a recess 12 is formed in a metal member 1 as illustrated in FIG. 1, while being irradiated more widely from the opening part towards the bottom, so that the thermoplastic resin (resin composition) can intrude deeply into the recess of the metal member to thereby demonstrate a high level of metal bonding strength.

In particular, a glass-based filler, when added, is crushed to some degree by the LDS additive, distinctively improving the bonding strength as a result of addition of the LDS additive.

Meanwhile, nano-molding technology (NMT) has been known as a method for treating the surface of the metal member. Although being a technology capable of bonding a metal member after being treated with acid or base to a resin member, the present inventors found from our investigations that recesses obtainable by NMT are finer than those formed by laser irradiation, so that the thermoplastic resin cannot intrude deeply therein, resulting in poor adhesiveness.

FIG. 2 illustrates an exemplary metal-resin composite 10 of this invention, which has a metal member 1, a thermoplastic resin member 2 arranged on a face of the metal member, and a plating layer 3 arranged on the thermoplastic resin member. The metal-resin composite illustrated in FIG. 1 is further anodized as a whole, to have an anodizing layer 4 formed thereon. Although anodizing is known to be a process targeted at metals as detailed later, anodizing in the context of this invention also includes a process such that anodizing, principally targeted at the metal contained in the metal-resin composite, is also concomitantly targeted at the thermoplastic resin member.

### <Metal Member>

The metal-resin composite of this invention has the metal member having the laser-treated surface. As described above, upon laser, by being formed the recess that has the bottom wider than the opening part, the thermoplastic resin intrudes deeply into recessed wall of such face of the metal member, and then solidifies as it is, to be anchored and fixed. Large bonding strength is supposed to be thus demonstrated.

Note that the metal member is not always necessarily laser-treated over the entire surface thereof, instead allowing that only a part of the surface is laser-treated. In this invention, note that the thermoplastic resin member is not always necessarily brought into contact with the entire range of the laser-treated surface of the metal member, and instead may of course be brought into contact with a part of the laser-treated surface. The metal member does not always necessarily have the irregularity over the entire part that is brought into contact with the thermoplastic resin member. That is, the metal member will suffice if it has the laser-treated partially in an area that is brought into contact with the thermoplastic resin member.

In this invention, the thermoplastic resin member is brought into contact with the metal member on a side having the laser-treated surface, and it is preferable that the thermoplastic resin member is brought into contact with the laser-treated surface of the metal member. Also as detailed later, in a case where a primer layer is provided on the face of the metal member, an embodiment by which the thermoplastic resin member is arranged on the thus processed face is understood to be an embodiment by which the thermoplastic resin member is brought into contact with the metal member on a side having the laser-treated surface.

Metals composing the metal member is exemplified by various metals such as aluminum, iron, copper, magnesium, tin, nickel and zinc, and alloys containing these metals. Among them, the metal member preferably contains at least one of aluminum, iron, copper and magnesium, as well as metals containing these metals, and more preferably contains aluminum or aluminum-containing alloy.

The metal member may be a member solely composed of metal, or may alternatively be a member composed of a non-metal part having an irregularity on a face which is plated with a metal such as nickel, chromium, zinc, gold or the like.

The metal member preferably has a shape selectable without special limitation from flat plate, curved plate, panel, rod, cylinder, bulk, sheet, film, and any customized specific shape. Surface profile of the starting metal member before given the irregularity is not specifically limited, and may not only be a monotonous flat face or curved face, but may also be variously profiled faces having step-like part, recess, or projection.

The metal member may preferably, but not restrictively, has a thickness ranging from 0.05 to 100 mm, which is more preferably 0.1 to 50 mm, and even more preferably 0.12 to 10 mm. In particular, the metal members, when composed of an aluminum sheet and an iron sheet, preferably have a thickness of 0.1 to 20 mm each, which is more preferably 0.2 to 10 mm. The thickness plainly represents the thickness for flat-shape metal members. For the non-flat metal member, the thickness of the thinnest part of the metal member in contact on a side having the irregularly-profiled face with the thermoplastic resin member, preferably falls within the aforementioned ranges.

The metal member is processed upon laser at least in a part of an area brought into contact with the thermoplastic resin member. The laser processing is a process of forming an irregularity on a surface of the metal member, by irradiating thereon laser beam, wherein the irregularity is formed by laser etching, which is conducted under conditions enabling formation of trenches on the metal surface, and allowing the surface to melt and re-solidify. For example, the irregularity is formed by scanning laser in a certain direction, and then by scanning in the same direction or crossing direction, which are repeated twice or more times. In the laser treatment, the laser beam is preferably irradiated at angles, specifically at an angle of 15 to 85° to the surface of the metal member, which is more preferably 25 to 75°. With such structure, the recess will have the bottom furthermore wider than the opening part, improving bonding between the metal member and the thermoplastic resin member.

Conditions of laser scanning include output, scanning speed, scanning frequency, number of times of scanning, hatch width (process pitch), and patterning morphology, which are suitably combined to obtain a desired fine surface irregularity composed of recesses and projections.

Types of the laser used for processing is suitably selected from those having wavelength given by solid-state laser, fiber laser, semiconductor laser, gas laser, and liquid laser. Also mode of oscillation is selectable from those causing continuous wave and pulse wave, depending on a desired surface irregularity on the metal member. The continuous wave, when employed, can give a more intricate irregularity.

Besides the laser processing, other treatment methods such as blasting and chemical treatment may be employed in a combined manner.

The surface irregularity of the metal member preferably has a ten-point average roughness Rz of 10 nm or larger and 300 µm or smaller.

The lower limit value of the Rz preferably is, in order, 20 nm or larger, 30 nm or larger, 50 nm or larger, 100 nm or larger, 500 nm or larger, 1 µm or larger, 5 µm or larger, 10 µm or larger, 40 µm or larger, 80 µm or larger, 100 µm or larger, 130 µm or larger, 150 µm or larger, 180 µm or larger, 200 µm or larger, and 230 µm or larger.

Meanwhile, the upper limit value of the Rz preferably is, in order, 250 µm or smaller, 200 µm or smaller, 180 µm or smaller, and 150 µm or smaller,

The ten point average roughness is measured according to a method described later in EXAMPLE.

The aforementioned metal member is also advantageously treated on the surface thereof with a silane coupling agent.

The silane coupling agent is exemplified, without special limitation, by compounds having methoxy group, ethoxy group, silanol group or the like. Preferred examples of the silane coupling agent include vinyltrimethoxysilane, chloropropyltrimethoxysilane, 3-glycidoxypropyltrimethoxysilane, 3-methacryloxypropyltrimethoxysilane, 3-aminopropyltriethoxysilane, N-2-aminoethyl-3-aminopropyltrimethoxysilane, 3-mercaptopropyltrimethoxysilane, 3-(N-stylylmethyl-2-aminoethylamino)propyltrimethoxysilane hydrochloride, and ureidoaminopropylethoxysilane. The silane coupling agent can be more tightly bound particularly to an aluminum base or iron base, through tight bonding as a result of formation of an Al-O-Si bond or Fe-O-Si bond, and through tight bonding as a result of reaction between organic functional groups of the resin composition and the silane coupling agent.

Alternatively, the bonding strength with the aid of chemical bonds may further be enhanced by a wet process using a solution of a triazine thiol derivative, by which a film of a triazine thiol derivative is preliminarily formed on the textured metal surface.

When bonding the metal member with the thermoplastic resin member, it is also preferable to form a chemical bond through effective utilization of polar groups, in addition to the anchoring effect. For example, the textured metal surface is preferably given acidic and basic functional groups such as COOH group and NH₂ group, by ozone treatment, plasma treatment, flame treatment, corona discharge treatment, or chemical liquid treatment.

The metal member is also preferably provided thereon with a primer layer. Preferred materials used for the primer layer include acryl-based material, epoxy resin-based material, urethane-based material, and polyamide-based material. A material used for the primer layer is commercially available, for example, under the trade name of "Aronmelt PPET", from Toagosei Co., Ltd.

### <Thermoplastic Resin Member>

The metal-resin composite of this invention contains the metal member, and the thermoplastic resin member arranged in contact with the side having the laser-treated surface.

The thermoplastic resin member in this invention is composed of a resin composition that contains 1 to 25 parts by mass of a laser direct structuring additive (B), per 100 parts by mass of a thermoplastic resin (A).

### <<Thermoplastic Resin (A)>>

A first embodiment of the thermoplastic resin (A) in this invention relates to a mode containing 40% by mass or more of the polyester-based resin (A-1), the content is more preferably 50% by mass or more, and even more preferably 55% by mass or more. The upper limit of the percentage of the polyester-based resin (A-1) in the thermoplastic resin (A) might be 100% by mass, it is preferably 90% by mass or below, and even more preferably 85% by mass or below. The thermoplastic resin in the first embodiment other than the polyester-based resin (A-1), although suitably selectable from the polyamide-based resin (A-2) and other thermoplastic resins described later, is preferably at least one of the polyamide-based resin (A-2) or polycarbonate-based resin (A-3).

A second embodiment of the thermoplastic resin (A) in this invention relates to a mode in which polyester-based resin (A-1) or polyamide-based resin (A-2) accounts for 60% by mass or more. The total content of the polyester-based resin (A-1) and the polyamide-based resin (A-2) in the second embodiment is preferably 70% by mass, more preferably 80% by mass or more, even more preferably 90% by mass or more, yet more preferably 95% by mass or more, and, preferably 100% by mass or less.

A third embodiment of the thermoplastic resin (A) in this invention relates to a mode containing 50% by mass or more of the polyamide-based resin (A-2), wherein the content is more preferably 55% by mass or more. The upper limit of the percentage of the polyamide-based resin (A-2) in the thermoplastic resin might be 100% by mass, it is preferably 90% by mass or below, and more preferably 85% by mass or below.

A fourth embodiment of the thermoplastic resin (A) in this invention relates to a mode that contains 50% by mass or more in total of the polycarbonate-based resin (A-3) and the styrene-based resin (A-4), the content is preferably 70% by mass or more, and more preferably 90% by mass or more. The upper limit of the percentage of the polycarbonate-based resin (A-3) and the styrene-based resin (A-4) in the thermoplastic resin (A) is preferably 100% by mass. In the fourth embodiment, the thermoplastic resin (A) is preferably composed of 10 to 90% by mass of the polycarbonate-based resin (A-3) and 90 to 10% by mass of the styrene-based resin (A-4), more preferably composed of 50 to 90% by mass of the polycarbonate-based resin (A-3) and 50 to 10% by mass of the styrene-based resin (A-4), and even more preferably composed of 55 to 80% by mass of the polycarbonate-based resin (A-3) and 45 to 20% by mass of the styrene-based resin (A-4).

A fifth embodiment of the thermoplastic resin (A) in this invention relates to a mode that contains 50% by mass or more in total of the polycarbonate-based resin (A-3) and the polyester-based resin (A-1), the content is preferably 70% by mass or more, and more preferably 90% by mass or more. The upper limit of the percentage of the polycarbonate-based resin (A-3) and the polyester-based resin (A-1) in the thermoplastic resin (A) is preferably 100% by mass. In the fifth embodiment, the thermoplastic resin (A) is preferably composed of 10 to 90% by mass of the polycarbonate-based resin (A-3) and 90 to 10% by mass of the polyester-based resin (A-1), more preferably composed of 50 to 90% by mass of the polycarbonate-based resin (A-3) and 50 to 10% by mass of the polyester-based resin (A-1), and even more preferably composed of 55 to 80% by mass of the polycarbonate-based resin (A-3) and 45 to 20% by mass of the polyester-based resin (A-1).

A further preferred embodiment of the thermoplastic resin (A) in this invention relates to a mode containing 50 to 85% by mass of the polyester-based resin (A-1), and 50 to 15% by mass of the polyamide-based resin (A-2). With such structure, the platability may be improved while keeping a high level of bonding strength between the metal member and the thermoplastic resin.

In the thermoplastic resin in this invention, the crystalline thermoplastic resin accounts for preferably 40% by mass or more, which is more preferably 60% by mass or more, and even more preferably 80% by mass or more. As for the upper limit value, the crystalline thermoplastic resin may account for 100% by mass. With the crystalline thermoplastic resin used therein, the thermoplastic resin will excel also in molding cycle characteristic, fluidity and chemical resistance.

The crystalline thermoplastic resin contained in the thermoplastic resin in this invention preferably has a crystallization temperature of 140 to 195°C, which is more preferably 145 to 190°C. With such structure, the molten resin will effectively permeate into recesses on the metal surface during a pressure holding period in a molding process, and thereby the bonding strength may further be enhanced. The crystallization temperature is measured according to a method described later in EXAMPLE.

### <<<Polyester-Based Resin (A-1)>>>

The polyester-based resin (A-1) is one preferred example of the thermoplastic resin. With the polyester-based resin (A-1) contained in the thermoplastic resin member, obtainable is the metal-resin composite with improved bonding strength with the metal. With the polyester-based resin (A-1) and particularly a polybutylene terephthalate resin used therein, the metal-resin composite will have improved resistance against anodizing when carried out.

The polyester-based resin (A-1) is a polyester obtainable by polycondensation of a dicarboxylic acid compound and a dihydroxy compound, or by polycondensation of an oxycarboxylic acid compound, or by polycondensation of these compounds, and may be either homopolyester or copolyester.

For the dicarboxylic acid compound composing the polyester-based resin (A-1), preferably used are aromatic dicarboxylic acid or ester-forming derivative thereof.

The aromatic dicarboxylic acid is exemplified by terephthalic acid, isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenylmethane-4,4'-dicarboxylic acid, diphenylsulfone-4,4'-dicarboxylic acid, diphenyl isopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-terphenylene-4,4'-dicarboxylic acid, and pyridine-2,5-dicarboxylic acid. Terephthalic acid is preferably used.

Two or more kinds of these aromatic dicarboxylic acids may be used in a mixed manner. As is well known, these compounds may be used as an ester-forming derivative in polycondensation reaction, not only in their free acid form, but also in the dimethyl ester form.

One or more kinds of aliphatic dicarboxylic acid such as adipic acid, azelaic acid, dodecanedioic acid and sebacic acid, or alicyclic dicarboxylic acid such as 1,2-cyclohexanedicarboxylic acid, 1,3-cyclohexanedicarboxylic acid and 1,4-cyclohexanedicarboxylic acid, may be used in a mixed form with these aromatic dicarboxylic acid, if the amount mixing is not so much.

The dihydroxy compound composing the polyester-based resin (A-1) is exemplified by aliphatic diols such as ethylene glycol, propylene glycol, 1,4-butanediol, hexamethylene glycol, neopentyl glycol, 2-methylpropane-1,3-diol, diethylene glycol, and triethylene glycol; alicyclic diols such as cyclohexane-1,4-dimethanol; and mixtures of these compounds. One or more kind of long-chain diols having a molecular weight of 400 to 6,000, such as polyethylene glycol, poly-1,3-propylene glycol, and polytetramethylene glycol, may be copolymerized if the amount is copolymerization is not so much.

Also aromatic diols such as hydroquinone, resorcinol, naphthalenediol, dihydroxydiphenyl ether, and 2,2-bis(4-hydroxyphenyl)propane may be employed.

Besides the aforementioned bifunctional monomers, small amount of a polyfunctional monomer such as ester-forming triacid including tricarballylic acid, trimesic acid and trimellitic acid, or ester-forming tetraacid such as pyromellitic acid, or, trihydric or tetrahydric ester-forming alcohols including glycerin, trimetillolpropane, and pentaerythritol may be used for introducing a branched structure. Also monofunctional compound such as fatty acid may be used for controlling the molecular weight.

As the polyester-based resin (A-1), usually used is a product principally composed of a polycondensate of a dicarboxylic acid and a diol, that is, a product in which such polycondensate accounts for 50% by mass, preferably 70% by mass or more of the entire resin. The dicarboxylic acid is preferably aromatic carboxylic acid, and the diol is preferably aliphatic diol.

A particularly preferred example among them is polyalkylene terephthalate in which terephthalic acid accounts for 95 mol% or more of the acid component, and aliphatic diol accounts for 95% by mass or more of the alcohol component, which is represented by polybutylene terephthalate and polyethylene terephthalate. These compounds are preferably comparable to a homopolymer, that is, comparable to a product in which terephthalic acid component and 1,4-butanediol or ethylene glycol component account for 95% by mass or more of the whole resin.

The polyester-based resin (A-1) preferably has an intrinsic viscosity of 0.3 to 2 dL/g. With the intrinsic viscosity controlled to 0.3 dL/g or larger, the obtainable thermoplastic resin member will have improved mechanical strength. Meanwhile, with the intrinsic viscosity controlled to 2 dL/g or smaller, the thermoplastic resin member will have improved viscosity, so as to further improve the moldability. From the viewpoint of moldability and mechanical characteristic, the intrinsic viscosity is more preferably 0.4 dL/g or larger, even more preferably 0.5 dL/g or larger, and yet more preferably 0.6 dL/g, meanwhile, more preferably 1.5 dL/g or smaller, even more preferably 1.3 dL/g or smaller, and particularly 1.2 dL/g or smaller, and may be 0.9 dL/g or smaller, and 0.8 dL/g or smaller.

The intrinsic viscosity of the polyester-based resin (A-1) is measured in a 1:1 (w/w) mixed solvent of tetrachloroethane and phenol, at 30°C. In a case where the thermoplastic resin member contains two or more kinds of the polyester-based resin (A-1), the intrinsic viscosity of polyester-based resin is determined by a sum of values of the intrinsic viscosity respectively multiplied by mass fractions of the individual polyester-based resins (A-1). The same will apply to the intrinsic viscosity discussed below.

Content of the terminal carboxy group of the polyester-based resin (A-1), which may be determined on the basis of a suitable choice, is usually 60 eq/ton or less, which is preferably 50 eq/ton or less, and may be 30 eq/ton or less. With the content controlled to 60 eq/ton or less, the resin composition will be less likely to emit gas during melt molding. The lower limit value of the content of terminal carboxy group is usually 3 eq/ton or above although not specifically limited, which is preferably 5 eq/ton, and more preferably 10 eq/ton or above. In a case where the thermoplastic resin member contains two or more kinds of the polyester-based resin (A-1), the content of terminal carboxy group of polyester-based resin is determined by a sum of values of the content of terminal carboxy group respectively multiplied by mass fractions of the individual polyester-based resins (A-1). The same will apply to the content of terminal carboxy group discussed below.

The content of terminal carboxy group of the polyester-based resin (A-1) is measured by dissolving 0.5 g of the resin in 25 mL of benzyl alcohol, and by titrating the solution with a 0.01 mol/L sodium hydroxide solution in benzyl alcohol. The content of terminal carboxy group is adjustable by any of known methods, for example by controlling polymerization conditions such as ratio of charge of starting materials to be polymerized, polymerization temperature and evacuation method, or by allowing a terminal blocking agent to react.

Water absorption of the polyester-based resin (A-1) is typically 0.01% by mass or more, and may be 0.05% by mass or more. Meanwhile, the water absorption is preferably 0.20% by mass or less, may be 0.15% by mass or less, and even may be 0.10% by mass. In a case where the thermoplastic resin member contains two or more kinds of the polyester-based resin (A-1), the water absorption of polyester-based resin is determined by a sum of the values of the content of terminal carboxy group respectively multiplied by mass fractions of the individual polyester-based resins (A-1). The water absorption is measured in compliance with ISO 62A. The same will apply to the water content discussed below.

In particular, the polyester-based resin (A-1) preferably contains a polybutylene terephthalate resin. More specifically, the polybutylene terephthalate resin preferably accounts for 50% by mass or more or the polyester-based resin (A-1), which is more preferably 55% by mass or more.

The polybutylene terephthalate resin may be manufactured by melt-polymerizing a dicarboxylic acid component mainly composed of terephthalic acid or an ester derivative thereof, with a diol component mainly composed of 1,4-butanediol, according to a batch process or continuous process. The degree of polymerization (or molecular weight) may be elevated to a desired level, by allowing a low-molecular-weight polybutylene terephthalate resin, having been manufactured by melt-polymerization, to polymerize in solid phase, under nitrogen gas flow or under reduced pressure.

The polybutylene terephthalate resin is manufactured preferably by continuous melt polymerization of a dicarboxylic acid component mainly composed of terephthalic acid and a diol component mainly composed of 1,4-butanediol.

A catalyst used for esterification reaction may be any of known ones which are exemplified by titanium compound, tin compound, magnesium compound, and calcium compound. Particularly preferred among them is titanium compound. Specific examples of the titanium compound as the esterification catalyst include titanium alcholates such as tetramethyl titanate, tetraisopropyl titanate, and tetrabutyl titanate; and titanium phenolates such as tetraphenyl titanate.

The polybutylene terephthalate resin may be a polybutylene terephthalate resin modified by copolymerization (occasionally referred to as "modified polybutylene terephthalate resin", hereinafter). Preferred examples of such copolymer include polybutylene terephthalate resin copolymerized with polyalkylene glycols (particularly, polytetramethylene glycol), polybutylene terephthalate resin copolymerized with dimer acid, and polybutylene terephthalate resin copolymerized with isophthalic acid.

With the copolymerization component introduced therein, the polybutylene terephthalate resin will advantageously have reduced crystallinity, enhanced water absorption, and improved platability.

In a case where the polybutylene terephthalate resin copolymerized with polytetramethylene glycol is used as the modified polybutylene terephthalate resin, the tetramethylene glycol component preferably accounts for 3 to 40% by mass of the copolymer, which is more preferably 5 to 30% by mass, and even more preferably 10 to 25% by mass.

In a case where the polybutylene terephthalate resin copolymerized with dimer acid is used as the modified polybutylene terephthalate resin, the dimer acid component preferably accounts for 0.5 to 30 mol% of the total carboxylic acid component on the basis of carboxylic acid group, which is more preferably 1 to 20 mol%, and even more preferably 3 to 15 mol%.

In a case where the polybutylene terephthalate resin copolymerized with isophthalic acid is used as the modified polybutylene terephthalate resin, the isophthalic acid component preferably accounts for 1 to 30 mol% of the total carboxylic acid component on the basis of carboxylic acid group, which is more preferably 1 to 20 mol%, and even more preferably 3 to 15 mol%.

Among the modified polybutylene terephthalate resins, preferred are polybutylene terephthalate resin copolymerized with dimer acid, polybutylene terephthalate resin copolymerized with polytetramethylene glycol, and polybutylene terephthalate resin copolymerized with isophthalic acid; and, more preferred are polybutylene terephthalate resin copolymerized with dimer acid and polybutylene terephthalate resin copolymerized with isophthalic acid.

Preferred polybutylene terephthalate resin has an intrinsic viscosity of 0.5 to 2 dL/g. From the viewpoint of moldability and mechanical characteristic, those having the intrinsic viscosity within the range from 0.6 to 1.5 dL/g are preferred. With the intrinsic viscosity controlled to 0.5 dL/g or larger, the obtainable thermoplastic resin member tends to have improved mechanical strength. Meanwhile, with the intrinsic viscosity controlled to 2 dL/g or smaller, the thermoplastic resin member tends to have improved fluidity, and thereby improved moldability.

The intrinsic viscosity is measured in a 1:1 (w/w) mixed solvent of tetrachloroethane and phenol, at 30°C.

Content of the terminal carboxy group of the polybutylene terephthalate resin, which may be determined on the basis of a suitable choice, is usually 60 eq/ton or less, which is preferably 50 eq/ton or less, more preferably 40 eq/ton or less, and may be 30 eq/ton or less. With the content controlled to 60 content eq/ton or less, the resin composition will be less likely to emit gas during melt molding. The lower limit value of the content of terminal carboxy group is usually 10 eq/ton or above, although not specifically limited, in consideration of productivity of the polybutylene terephthalate resin.

The content of terminal carboxy group of the polybutylene terephthalate resin is measured by dissolving 0.5 g of the polyalkylene terephthalate resin in 25 mL of benzyl alcohol, and by titrating the solution with a 0.01 mol/L sodium hydroxide solution in benzyl alcohol. The content of terminal carboxy group is adjustable by any of known methods, for example by controlling polymerization conditions such as ratio of charge of starting materials to be polymerized, polymerization temperature and evacuation method, or by allowing a terminal blocking agent to react.

The polyester-based resin (A-1) may also preferably contain the polybutylene terephthalate homopolymer and the modified polybutylene terephthalate resin. With a specific amount of the modified polybutylene terephthalate resin contained therein, the weld strength, alkali resistance, and heat shock resistance after plating tend to improve desirably.

In a case where the polyester-based resin (A-1) contains the polybutylene terephthalate homopolymer and the modified polybutylene terephthalate resin, the modified polybutylene terephthalate resin preferably accounts for 5 to 60% by mass, per 100% by mass in total of the polybutylene terephthalate homopolymer and the modified polybutylene terephthalate resin, which is more preferably 10 to 60% by mass, and even more preferably 20 to 55% by mass.

The polyester-based resin (A-1) also preferably contains polybutylene terephthalate resin and polyethylene terephthalate resin. With a predetermined amount of polyethylene terephthalate resin contained therein, the weld strength will be more likely to improve desirably.

In a case where the polyester-based resin (A-1) contains polybutylene terephthalate resin and polyethylene terephthalate resin, the polyethylene terephthalate resin preferably accounts for 5 to 50% by mass, per 100% by mass in total of the polybutylene terephthalate resin and the polyethylene terephthalate resin, which is more preferably 10 to 50% by mass, and even more preferably 15 to 45% by mass. Now the polybutylene terephthalate resin encompasses both of polybutylene terephthalate homopolymer and modified polybutylene terephthalate resin.

The polyethylene terephthalate resin is a resin in which an oxyethylene-oxyterephthaloyl unit, composed of terephthalic acid and ethylene glycol, is a major structural unit among from the whole structural repeating units, and may contain any structural repeating unit other than the oxyethylene-oxyterephthaloyl unit. The polyethylene terephthalate resin, which is manufactured using terephthalic acid or its lower alkyl ester, and ethylene glycol as major starting materials, may also use other acid component and/or other glycol component as the starting materials.

The acid component other than terephthalic acid is exemplified by dicarboxylic acids such as orthophthalic acid, isophthalic acid, 1,5-naphthalenedicarboxylic acid, diphenylsulfone-4,4'-dicarboxylic acid, biphenyl-4,4'-dicarboxylic acid, 1,4-cyclohexanedicarboxylic acid, 1,3-phenylene dioxydiacetate and structural isomers of them, malonic acid, succinic acid, and adipic acid, and derivatives of these dicarboxylic acid; and oxyacids such as p-hydroxybenzoic acid and glycolic acid, and derivative of these oxyacids.

The diol component other than ethylene glycol is exemplified by aliphatic diols such as propylene glycol, 1,4-butanediol, hexamethylene glycol, neopentyl glycol, 2-methylpropane-1,3-diol, diethylene glycol, and triethylene glycol; alicyclic diols such as cyclohexane-1,4-dimethanol; and mixtures of these compounds. If the amount is not so much, one or more kinds of long-chain diol having a molecular weight of 400 to 6,000, such as polyethylene glycol, poly-1,3-propylene glycol, polytetramethylene glycol or the like, may be copolymerized.

Also aromatic diols such as hydroquinone, resorcinol, naphthalenediol, dihydroxydiphenyl ether, and 2,2-bis(4-hydroxyphenyl)propane may be employed.

The polyethylene terephthalate resin may further be copolymerized with a branched component which is exemplified by trifunctional ester-forming acids such as tricarballylic acid, trimesic acid and trimellitic acid; or with tetrafunctional ester-forming acids such as pyromellitic acid; or with trihydric or tetrahydric ester-forming alcohols such as glycerin, pentaerythritol, and trimethylolpropane, whose amount of copolymerization is typically 1.0 mol% or less, more preferably 0.5 mol% or less, and even more preferably 0.3 mol% or less.

The polyethylene terephthalate resin preferably has an intrinsic viscosity of 0.3 to 1.5 dL/g, which is more preferably 0.3 to 1.2 dL/g, and most preferably 0.4 to 0.8 dL/g.

The intrinsic viscosity of the polyethylene terephthalate resin is measured in a 1:1 (w/w) mixed solvent of tetrachloroethane and phenol, at 30°C.

The polyethylene terephthalate resin has a concentration of the terminal carboxy group of 3 to 50 eq/ton, which is preferably 5 to 45 eq/ton, and more preferably 10 to 40 eq/ton.

The concentration of the terminal carboxy group of the polyetylene terephthalate resin is measured by dissolving 0.5 g of the polyethylene terephthalate resin in 25 mL of benzyl alcohol, and by titrating the solution with a 0.01 mol/L sodium hydroxide solution in benzyl alcohol.

The content of terminal carboxy group is adjustable by any of known methods, for example by controlling polymerization conditions such as ratio of charge of starting materials to be polymerized, polymerization temperature and evacuation method, or by allowing a terminal blocking agent to react.

### <<<Polyamide-Based Resin (A-2)>>>

The polyamide-based resin (A-2) means a ring-opened polymer of lactams; polymers obtained by polycondensation of diaminocarboxylic acid; and polymers obtained by polycondensation between amines and dibasic acids, or between equivalent compounds. The lactams are exemplified by propiolactam, α-pyrrolidone, ε-caprolactam, enantholactam, ω-laurolactam, and cyclododecalactam. The diaminocarboxylic acids are exemplified by aminocaproic acid, 7-aminoheptanoic acid, 11-aminoundecanoic acid, and 9-aminononanoic acid. The amines are exemplified by hexamethylenediamine, metaxylylenediamine, and paraxylylenediamine. The dibasic acids are exemplified by terephthalic acid, isophthalic acid, adipic acid, sebacic acid, dodecanedioic acid, and glutaric acid.

A first embodiment of the polyamide-based resin (A-2) is an aliphatic polyamide resin.

The aliphatic polyamide resin is more specifically exemplified by polyamide 4, polyamide 6, polyamide 7, polyamide 8, polyamide 11, polyamide 12, polyamide 66, polyamide 69, polyamide 610, polyamide 611, polyamide 612, polyamide 6/66, and polyamide 6/12. The polyamide-based resin may be a single material, or may be a mixture of two or more compounds. Among these polyamide-based resins (A-2), those having the melting point not so largely different from the melting point of the polyester-based resin (A-1) are preferred. In a case where the polybutylene terephthalate resin is used, preferably combined is polyamide 6, polyamide 6/66 copolymer or polyamide 66. Polyamide 6 is more preferred.

A second embodiment of the polyamide-based resin (A-2) is a semiaromatic polyamide resin. The semiaromatic polyamide resin means a structural unit that is composed of a diamine-derived structural unit and a dicarboxylic acid-derived structural unit, in which an aromatic ring-containing structural unit accounts for 30 to 70 mol% of the total of the diamine-derived structural unit and the dicarboxylic acid-derived structural unit. The aromatic ring-containing structural unit preferably accounts for 40 to 60 mol% of the total of the diamine-derived structural unit and the dicarboxylic acid-derived structural unit. With such semiaromatic polyamide resin used therein, the obtainable resin molding will have enhanced mechanical strength. The semiaromatic polyamide resin is exemplified by polyamide 6T, polyamide 9T, and xylylenediamine-based polyamide resin described later.

The polyamide-based resin in the second embodiment is preferably such that, at least one kind thereof is a polyamide resin (occasionally referred to as "xylylenediamine-based polyamide resin", hereinafter) that is composed of a diamine-derived structural unit and a dicarboxylic acid-derived structural unit, in which 70 mol% or more of the diamine-derived structural unit is derived from xylylenediamine, 70 mol% or more of the dicarboxylic acid-derived structural unit is derived from a straight chain α,ω-aliphatic dicarboxylic acid having 4 to 20 carbon atoms (preferably adipic acid or sebacic acid, and more preferably adipic acid).

More preferably 80 mol% or more of the diamine-derived structural unit in the xylylenediamine-based polyamide resin is derived from xylylenediamine, the percentage being even more preferably 85 mol% or more, yet more preferably 90 mol% or more, and furthermore preferably 95 mol% or more. Meanwhile, more preferably 80 mol% or more of the dicarboxylic acid-derived structural unit in the xylylenediamine-based polyamide resin is derived from straight-chain α,ω-aliphatic dicarboxylic acid having 4 to 20 carbon atoms, the percentage being more preferably 85 mol% or more, yet more preferably 90 mol% or more, and furthermore preferably 95 mol% or more.

The xylylenediamine is preferably paraxylylenediamine and metaxylylenediamine, and is more preferably a mixture of metaxylylenediamine and paraxylylenediamine.

The semiaromatic polyamide resin is specifically exemplified by polyamide 6T; polyamide 6/6T; polyamide 6/61; polyamide 6I/6T; polycondensate of metaxylylenediamine and adipic acid (polyamide MXD6); polycondensate of mixed diamine composed of metaxylylenediamine and paraxylylenediamine, and adipic acid (polyamide PAMP6); and polycondensate of paraxylylenediamine and sebacic acid (polyamide PXD10). Among them, MXD6 and PAMP6 are preferred, and PAMP6 is more preferred.

Relative viscosity of the polyamide-based resin (A-2) is measured in 98% sulfuric acid, at a concentration of 1% by mass at 25°C, and is usually 1.6 to 4.0, and preferably 2.0 to 3.8. With the relative viscosity smaller than 1.6, the obtainable resin composition tends to become brittle, whereas with the relative viscosity exceeding 4, the resin composition will occasionally become less fluidic during molding.

Content of the terminal carboxy group in the polyamide-based resin (A-2) may be determined on the basis of a suitably choice, which is preferably 35 µeq/g or more, more preferably 40 µeq/g or more, even more preferably 45 µeq/g or more, and particularly 50 µeq/g or more. The upper limit value is usually 140 µeq/g or below, preferably 130 µeq/g or below, and more preferably 120 µeq/g or below. Meanwhile, content of the terminal amino group is preferably 10 µeq/g or more, more preferably 15 µeq/g or more, and even more preferably 20 µeq/g or more. The upper limit value is usually 100 µeq/g or below, preferably 80 µeq/g or below, and even more preferably 70 µeq/g or below. With such contents of the terminal groups, the alkali resistance and the heat shock resistance will be improved advantageously.

The content of the terminal carboxy group in the polyamide-based resin (A-2) is measured by dissolving the polyamide-based resin in benzyl alcohol, and by titrating the solution with 0.01 N sodium hydroxide. Meanwhile, the content of the terminal amino group is measured by dissolving the polyamide-based resin in phenol, and by titrating the solution with 0.01 N hydrochloric acid. The content of terminal carboxy group and the content of terminal amino group are adjustable by any of known methods, for example by controlling polymerization conditions such as ratio of charge of starting materials to be polymerized, polymerization temperature and evacuation method, or by allowing a terminal blocking agent to react.

The polyamide-based resin (A-2) preferably has a water absorption of 0.4% by mass or more, which is more preferably 0.5% by mass or more, and even more preferably 1.0% by mass or more, meanwhile, preferably 2.5% by mass or less, and more preferably 2.0% by mass or less. Use of the polyamide-based resin with the thus controlled water absorption will improve the platability.

In this invention, difference between the water absorption of polyamide-based resin (A-2) and the water absorption of polyester-based resin (A-1) is 0.7% by mass or larger, more preferably 0.8% by mass or larger, even more preferably 1.0% by mass or larger, and yet more preferably 1.2% by mass or larger. The upper limit value of the difference of water absorption is preferably 2.5% by mass or smaller, more preferably 2.0% by mass or smaller, and even more preferably 1.8% by mass or smaller. With such structure, the obtainable metal-resin composite will have good anodizing resistance, while keeping the platability at a higher level.

### <<<Polycarbonate-Based Resin (A-3)>>>

The polycarbonate-based resin is a possibly branched, thermoplastic polymer or copolymer, obtainable by allowing a dihydroxy compound, possibly accompanied by a small amount of polyhydroxy compound, to react with phosgene or carbonate diester.

The polycarbonate-based resin employable here may be any of those manufactured by known interfacial polymerization and molten process (transesterification), without special limitation.

Starting dihydroxy compound is preferably aromatic dihydroxy compound, and is specifically exemplified by 2,2-bis(4-hydroxyphenyl)propane (or, bisphenol A), tetramethyl bisphenol A, bis(4-hydroxyphenyl)-p-diisopropylbenzene, hydroquinone, resolcinol, and 4,4-dihydroxydiphenyl, wherein bisphenol A is preferred. Also employable is a compound having one or more units of tetraalkylphosphonium sulfonate bound to the aromatic dihydroxy compound.

Among them, the polycarbonate-based resin is preferably an aromatic polycarbonate-based resin derived from 2,2-bis(4-hydroxyphenyl)propane, or, an aromatic polycarbonate copolymer derived from 2,2-bis(4-hydroxyphenyl)propane and other aromatic dihydroxy compound, or even may be a copolymer mainly composed of an aromatic polycarbonate-based resin, such as a copolymer with a polymer or oligomer having a siloxane structure. Two or more kinds of the aforementioned polycarbonate-based resins may be used in a mixed manner.

Molecular weight of the polycarbonate-based resin may be controlled by using a monohydric aromatic hydroxy compound which is exemplified by *m-* and p-methylphenols, m- and p-propylphenols, p-tert-butylphenol, and p-long chain alkyl substituted phenol.

The polycarbonate-based resin preferably has a viscosity average molecular weight Mv of 5,000 to 50,000, which is more preferably 10,000 to 45,000, and even more preferably 14,000 to 40,000. With the viscosity average molecular weight controlled to 5,000 or larger, the obtainable molded article tends to have improved mechanical strength. Meanwhile, if suppressed to 50,000 or smaller, the thermoplastic resin will have improved fluidity, resulting in improved moldability. The viscosity average molecular weight of the polycarbonate-based resin is viscosity average molecular weight [Mv] measured at 25°C, calculated from viscosity of solution using methylene chloride as a solvent.

The polycarbonate-based resin preferably gives a ratio (Mw/Mn), which is ratio of polystyrene-equivalent mass average molecular weight Mw and number-average molecular weight Mn, both measured by gel permeation chromatography (GPC), of 2.0 to 5.0, which is more preferably 2.5 to 4.0. Excessively small Mw/Mn tends to increase the melt fluidity, and to degrade the moldability. Meanwhile, excessively large Mw/Mn tends to increase the melt viscosity, and to make molding difficult.

The content of the terminal hydroxy group of the polycarbonate-based resin is preferably 100 mass ppm or more, from the viewpoint of thermal stability, hydrolytic stability, hue and so forth, which is more preferably 200 mass ppm or more, even more preferably 300 mass ppm or more, yet more preferably 400 mass ppm or more, and furthermore preferably 500 mass ppm. It is, however, usually 1,500 mass ppm or less, preferably 1,300 mass ppm or less, even more preferably 1,200 mass ppm or less, yet more preferably 1,100 mass ppm or less, and furthermore preferably 1,000 mass ppm or less. Excessively small content of the terminal hydroxy group in the polycarbonate-based resin degrades compatibility with the thermoplastic polyester, and may occasionally degrade an initial hue during molding. Meanwhile, excessively large content of the terminal hydroxy group tends to degrade residence thermal stability and moist heat resistance.

The polycarbonate-based resin preferably has a water absorption of 0.1% by mass or more, which is more preferably 2.5% by mass or less, and even more preferably 2.0% by mass or less. Employment of the polycarbonate-based resin having such water absorption enables further improvement of the platability. In particular, blending with the polyester-based resin (A-1), having small water absorption, makes it possible to improve the platability, while retaining characteristics of the polyester-based resin, including anodizing resistance.

For other details of the polycarbonate-based resin, descriptions in paragraphs [0014] to [0089] of JP-A-2016-108526 may be referred to, the contents of which are incorporated by reference into this patent specification.

### <<<Styrene-Based Resin (A-4)>>>

The styrene-based resin (A-4) is a resin obtainable by polymerizing a styrene-based monomer, and one or more optional components copolymerizable therewith selected from other vinyl monomer and rubbery polymer.

The styrene-based monomer used for the styrene-based resin (A-4) is exemplified by styrene, and styrene derivatives such as α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene and tribromostyrene. Styrene is particularly preferred. Only one of them may be used independently, or two or more of them may be used in a mixed manner.

Such other vinyl monomer copolymerizable with these styrene-based monomers is exemplified by vinyl cyanide compounds such as acrylonitrile and methacrylonitrile; aryl acrylates such as phenyl acrylate and benzyl acrylate; alkyl acrylates such as methyl acrylate, ethyl acrylate, propyl acrylate, butyl acrylate, amyl acrylate, hexyl acrylate, 2-ethylhexyl acrylate, octyl acrylate, cyclohexyl acrylate, and dodecyl acrylate; aryl methacrylates such as phenyl methacrylate and benzyl methacrylate; alkyl methacrylates such as methyl methacrylate, ethyl methacrylate, propyl methacrylate, butyl methacrylate, amyl methacrylate, hexyl methacrylate, 2-ethylhexyl methacrylate, octyl methacrylate, cyclohexyl methacrylate, and dodecyl methacrylate; epoxy group-containing methacrylates such as glycidyl methacrylate; maleimide-based monomers such as maleimide, N-methylmaleimide and N-phenylmaleimide; and, α,β-unsaturated carboxylic acids such as acrylic acid, methacrylic acid, maleic acid, maleic anhydride, phthalic acid and itaconic acid, as well as anhydrides or them. Alkyl acrylate and alkyl methacrylate are preferred.

Only one of these vinyl monomers may be used independently, or two or more of them may be used in a mixed manner.

As the rubbery polymer copolymerizable with the styrene-based monomer, suitable is rubber having a glass transition temperature of 10°C or lower. Specific examples of such rubbery polymer include diene-based rubber, acryl-based rubber, ethylene-propylene rubber, silicone rubber, and IPN (interpenetrating polymer network)-type composite rubber in which a polyorganosiloxane rubber component and a polyalkyl (meth)acrylate rubber component are entangled so as to be inseparable. The diene-based rubber and acryl-based rubber are preferred.

The diene-based rubber is exemplified by polybutadiene; styrene-butadiene random copolymer and block copolymer; acrylonitrile-butadiene copolymer; polyisoprene; butadiene-isoprene copolymer; ethylene-propylene-unconjugated diene terpolymer such as ethylene-propylene-hexadiene copolymer; butadiene-lower (meth)acrylate copolymer; and butadiene-styrene-lower alkyl (meth)acrylate copolymer.

The lower (meth)acrylate is exemplified by methyl acrylate, ethyl acrylate, methyl methacrylate, and ethyl methacrylate.

Percentage of the lower (meth)acrylate, in the butadiene-lower (meth)acrylate copolymer or the butadiene-styrene-lower (meth)acrylate copolymer, is preferably 30% by mass or less of the weight of rubber.

The acryl-based rubber is exemplified by alkyl acrylate rubber, wherein the alkyl group preferably has 1 to 8 carbon atoms. The alkyl acrylate is specifically exemplified by ethyl acrylate, butyl acrylate, and ethylhexyl acrylate. The alkyl acrylate rubber may employ ethylenic unsaturated monomer by free choice. Specific examples of such compound include di(meth)acrylate, divinylbenzene, trivinylbenzene, triallyl cyanurate, allyl (meth)acrylate, butadiene, and isoprene. The acryl-based rubber is also exemplified by core-shell-type polymer having a crosslinked diene-based rubber as the core.

Only one kind of these rubbery polymers may be used independently, or two or more kinds of them may be used in a mixed manner.

The styrene-based resin (A-4) used in this invention is exemplified by styrene homopolymer, copolymer of styrene and (meth)acrylonitrile, copolymer of styrene and alkyl (meth)acrylate, copolymer of styrene and (meth)acrylonitrile and other copolymerizable monomer, graft copolymer obtained by polymerizing styrene in the presence of rubber, and graft copolymer obtained by polymerizing styrene and (meth)acrylonitrile in the presence of rubber. More specific examples include resins such as polystyrene, styrene-butadiene-styrene copolymer (SBS resin), hydrogenated styrene-butadiene-styrene copolymer (hydrogenated SBS), hydrogenated styrene-isoprene-styrene copolymer (SEPS), high impact polystyrene (HIPS), acrylonitrile-styrene copolymer (AS resin), styrene-maleic anhydride copolymer (SMA resin), acrylonitrile-butadiene-styrene copolymer (ABS resin), acrylonitrile-styrene-acryl rubber copolymer (ASA resin), methyl methacrylate-butadiene-styrene copolymer (MBS resin), methyl methacrylate-acrylonitrile-butadiene-styrene copolymer (MABS resin), acrylonitrile-acryl rubber-styrene copolymer (AAS resin), acrylonitrile-ethylene propylene-based rubber-styrene copolymer (AES resin) and styrene-IPN-type rubber copolymer, as well as mixtures of them. Also those having tacticity, such as syndiotactic polystyrene, may be used. Alternatively, aromatic vinyl-based monomers are widely selectable, in place of the aforementioned styrenes.

Among them, acrylonitrile-butadiene-styrene copolymer (ABS resin), acrylonitrile-styrene-acryl rubber copolymer (ASA resin), acrylonitrile-ethylene propylene-based, and rubber-styrene copolymer (AES resin) are preferred, and in particular, acrylonitrile-butadiene-styrene copolymer (ABS resin) is preferred.

Methods for manufacturing the styrene-based resin (A-4) is exemplified by known methods including emulsion polymerization, solution polymerization, suspension polymerization, and bulk polymerization.

### <<<Other Thermoplastic Resins>>>

The thermoplastic resin member in this invention may contain some other thermoplastic resin besides the aforementioned thermoplastic resin. Such other thermoplastic resin is exemplified by, but not specifically limited to, polylactide-based resin, polyolefin resin, and polyphenylene sulfide resin.

Content of such other thermoplastic resins, when blended, is preferably 10 to 60% by mass of the thermoplastic resin.

Percentage of content of the thermoplastic resin (A) in the resin composition is preferably 40% by mass or more, and is more preferably 44% by mass or more. The percentage of content is preferably 95% by mass or less, more preferably 90% by mass or less, and even more preferably 85% by mass or less.

As described above, the thermoplastic resin (A) used in this invention may be of a single kind, or of a mixture of two or more kinds thereof. When two or more kinds are used, the total content preferably falls in the aforementioned ranges.

### <<Laser Direct Structuring Additive (LDS Additive) (B)>>

The thermoplastic resin member in this invention is composed of, besides the thermoplastic resin, the resin composition that contains the laser direct structuring additive (B).

The LDS additive in this invention is a compound capable of forming a plating layer (ranked at "B" in evaluation of platability in EXAMPLE described later), when 10 parts by mass of such additive, expected to be an LDS additive, is added to 100 parts by mass of the thermoplastic resin contained in the thermoplastic resin member, then irradiating the mixture with YAG laser at a wavelength of 1064 nm, an output of 13 W, a frequency of 20 kHz, and a scanning speed of 2 m/s, followed by electroless plating in a plating bath
MID Copper 100XB Strike from MacDermid Inc., so as to apply a metal on the laser-irradiated surface.

The LDS additive used in this invention may be a synthesized one, or a marketed product. The marketed product is not always necessarily a substance specialized as an LDS additive, but also a substance targeted at other purposes so long as requirements for the LDS additive in this invention are satisfied. The LDS additive may be of a single kind, or of a mixture of two or more kinds thereof.

A first embodiment of the LDS additive used in this invention is a compound that contains copper and chromium. The LDS additive of the first embodiment preferably contains 10 to 30% by mass of copper, and 15 to 50% by mass of chromium. The LDS additive of the first embodiment is preferably an oxide that contains copper and chromium.

Copper and chromium are preferably contained in a spinel structure. The spinel structure is one of popular crystal structures found in AB₂O₄-type double oxide (A and B represent metal elements).

The LDS additive of the first embodiment may contain a trace amount of other metal, besides copper and chromium. Such other metal is exemplified by antimony, tin, lead, indium, iron, cobalt, nickel, zinc, cadmium, silver, bismuth, arsenic, manganese, magnesium and calcium. Manganese is preferred. These metals may exist in the oxide form.

One preferred example of the LDS additive of the first embodiment relates to an LDS additive that contains 10% by mass or less of a metal oxide other than the copper chromium oxide.

A second embodiment of the LDS additive used in this invention is an oxide that contains antimony and/or phosphorus, as well as tin, and is preferably an oxide that contains antimony and tin.

The LDS additive of the second embodiment preferably has the tin content larger than the phosphorus and/or antimony content, wherein tin preferably accounts for 80% by mass or more of the total content of tin and phosphorus and antimony.

In particular, the LDS additive of the second embodiment is preferably an oxide that contains antimony and tin as described above, more preferably an oxide having the tin content larger than the antimony content, and even more preferably an oxide that contains 80% by mass or more of tin relative to the total content of tin and antimony.

More specifically, the LDS additive of the second embodiment is exemplified by antimony-doped tin oxide, antimony oxide-doped tin oxide, phosphorus-doped tin oxide, and phosphorus oxide-doped tin oxide. Antimony-doped tin oxide and antimony oxide-doped tin oxide are preferred, and antimony oxide-doped tin oxide is more preferred. For example, in an LDS additive that contains phosphorus and tin oxide, the phosphorus content is typically 1 to 20% by mass. Meanwhile, in an LDS additive that contains antimony and tin oxide, the antimony content is preferably 1 to 20% by mass. In an LDS additive that contains phosphorus and antimony and tin oxide, the phosphorus content is preferably 0.5 to 10% by mass, and the antimony content is preferably 0.5 to 10% by mass.

A third embodiment of the LDS additive used in this invention preferably contains at least two kinds of metal, and preferably contains an electroconductive oxide having a resistivity of 5×10³ Ω·cm or smaller. The resistivity of the electroconductive oxide is preferably 8×10² Ω·cm or smaller, more preferably 7×10² Ω·cm or smaller, and even more preferably 5×10² Ω·cm or smaller. The lower limit value, although not specifically limited, may be 1×10¹ Ω·cm or larger for example, and even may be 1×10² Ω·cm or larger.

The resistivity of the electroconductive oxide in this invention usually means powder resistivity, which is measured using "Model 3223" tester from Yokogawa Electric Corporation, in such a way that 10 g of fine powder of electroconductive oxide is packed into a Teflon (registered trademark)-lined cylinder having an inner diameter of 25 mm and pressurized at 100 kgf/cm² (packing ratio: 20%) .

The LDS additive used in the third embodiment, although not specifically limited so long as it contains an electroconductive oxide having a resistivity of 5×10³ Ω·cm or smaller, preferably contains at least two kinds of metal, and more specifically contains a metal in Group n (n represents an integer of 3 to 16), and a metal in Group n+1 in the periodic table. n preferably represents an integer of 10 to 13, which is more preferably 12 or 13.

Letting the total content, in the LDS additive, of the Group n (n represents an integer of 3 to 16) metal and the Group n+1 metal in the periodic table be 100 mol%, one metal in the LDS additive used in the third embodiment preferably accounts for 15 mol% or less, which is more preferably 12 mol% or less, and even more preferably 10 mol% or less. The lower limit is preferably, but not specifically limited to, 0.0001 mol% or above. With the contents of two or more kinds of metal controlled within these ranges, the platability will be improved. In this invention, oxide of Group n metal, doped with a Group n+1 metal, is particularly preferred.

In addition in the LDS additive used in the third embodiment, 98% by mass or more of the metal ingredients contained in the LDS additive is preferably composed of the aforementioned Group n metal and the group n+1 metal.

Group n metal in the periodic table is exemplified by those in Group 3 (scandium, yttrium), Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), Group 15 (arsenic, antimony, etc.), Group 16 (selenium, tellurium, etc.), and oxides of these metals. Among them, Group 12 (n=12) metals or metal oxides are preferred, and zinc is more preferred.

Group n+1 metal in the periodic table is exemplified those in Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), Group 15 (arsenic, antimony, etc.), Group 16 (selenium, tellurium, etc.), and oxides of these metals. Among them, Group 13 (n+1=13) metals or metal oxides are preferred, aluminum or gallium are more preferred, and aluminum is even more preferred.

The LDS additive used in the third embodiment may contain a metal besides the electroconductive metal oxide. The metal other than the electroconductive oxide is exemplified by antimony, titanium, indium, iron, cobalt, nickel, cadmium, silver, bismuth, arsenic, manganese, chromium, magnesium, and calcium. These metals may reside in the oxide form. The content of each of these metals is preferably 0.01% by mass or less of the LDS additive.

From the viewpoint of improving the L-value, the LDS additive used in the third embodiment preferably has an antimony content, relative to the LDS additive, of 3% by mass or less, which is more preferably 1% by mass or less, even more preferably 0.01% by mass or less, and particularly, substantially none. Now "substantially none" means that the content is out of the range possibly affecting the effects of this invention.

The LDS additive used in this invention preferably has an average particle size of 0.01 to 100 µm, which is more preferably 0.05 to 30 µm, and even more preferably 0.05 to 15 µm. With such average particle size, the LDS additive will be able to disperse more uniformly in the resin composition, which advantageously tends to improve the platability.

Among from those enumerated above, the LDS additive used in this invention preferably contains at least one of copper, antimony and tin, and is more preferably exemplified by heavy metal composite oxide spinels such as copper chromium oxide (CuCr₂O₄); copper salts such as copper hydroxide phosphate salt, copper phosphate, copper sulfate, and copper thiocyanate; and antimony-containing tin oxides such as antimony-doped tin oxide. Among them, copper chromium oxide or antimony-containing tin oxide is preferred.

The copper chromium oxide, also serves as a black pigment, is suitable for obtaining a black molded article. Meanwhile, the antimony-containing tin oxide, also serves as a white pigment, is suitable for obtaining a white molded article, or creating a desired color variation on the basis of further combination with other pigments of various colors.

Content of LDS additive in the resin composition is 1 to 25 parts by mass per 100 parts by mass of the thermoplastic resin, which is more preferably 3 parts by mass or more, even more preferably 5 parts by mass or more, yet more preferably 8 parts by mass or more, meanwhile, preferably 20 parts by mass or less, and more preferably 18 parts by mass or less. Only a single kind of the LDS additive may be used, or two or more kinds are used in a combined manner. When two or more kinds are used, the total content preferably falls within the aforementioned ranges.

### «Glass-Based Filler»

The resin composition also preferably contains a glass-based filler.

The glass-based filler is exemplified by glass fiber, sheet glass, glass bead and glass flake. Glass fiber is preferred.

The glass-based filler is selected from those having compositions of A-glass, C-glass, E-glass and S-glass. E-glass (non-alkali glass) is particularly preferred.

The glass fiber is referred to as those having circular or polygonal cross-section when taken in perpendicular to the longitudinal direction, and having an appearance of fiber. The glass fiber, as a monofilament, has a number-average fiber diameter of usually 1 to 25 µm, which is preferably 5 to 17 µm. With the number-average fiber diameter controlled to 1 µm or longer, the resin composition tends to have improved moldability into the thermoplastic resin member. With the number-average fiber diameter controlled to 25 µm or shorter, the thermoplastic resin member tends to improve the appearance, and also tends to enhance the reinforcing effect. The glass fiber may be a filament, or a strand twisted from a plurality of filaments.

The glass fiber may have any product form including glass roving which is a filament or a strand twisted from a plurality of filament and wound up on a roll; chopped strand evenly cut into 1 to 10 mm long (that is, glass fiber with a number-average fiber length of 1 to 10 mm); and milled fiber ground into 10 to 500 µm long or around (that is, glass fiber with a number-average fiber length of 10 to 500 µm). The chopped strand evenly cut into 1 to 10 mm long is preferred. The glass fibers with different shapes may be used in a combined manner.

Also preferred is a glass fiber having a modified cross-sectional shape. The modified cross-sectional shape is preferably defined by a flatness, which is given by "long diameter/short diameter" of a cross section taken perpendicularly to the longitudinal direction of fiber, of 1.5 to 10 for example, which is preferably 2.5 to 10, even more preferably 2.5 to 8, and most preferably 2.5 to 5.

The glass bead is preferably any of those having a spherical shape with an outer diameter of 10 to 100 µm, meanwhile, the glass flake is preferably any of those having a scaly shape with a thickness of 1 to 20 µm, and a length of one side of 0.05 to 1 mm.

For the purpose of improving affinity with the resin component, the glass-based filler may be treated on the surface thereof with a silane-based compound, epoxy-based compound, urethane-based compound or the like, or may be oxidized, so long as the characteristics of the resin composition will not largely be affected.

Content of the glass-based filler is preferably 10 parts by mass or more, per 100 parts by mass in total of the thermoplastic resin, which may be 20 parts by mass or more, 30 parts by mass or more, 40 parts by mass or more, and 45 parts by mass or more. The upper limit value of the content is preferably 150 parts by mass or below, more preferably 100 parts by mass or below, and may be 85 parts by mass or below, 75 parts by mass or below, and 65 parts by mass or below.

Only a single kind of the glass-based filler may be used, or two or more kinds are used in a combined manner. When two or more kinds are used, the total content preferably falls within the aforementioned ranges.

### «Elastomer»

The resin composition also preferably contains an elastomer, in addition to the aforementioned ingredients. With the elastomer contained therein, the resin composition will have improved impact resistance. Note that the elastomer in this patent specification is specified as an ingredient different from the thermoplastic resin.

The elastomer used in this invention is usually, but not specifically limited to, a rubbery polymer, or a product composed of the rubbery polymer and a reactive compound copolymerized therewith. The elastomer preferably has a glass transition temperature of 0°C or below, which is more preferably -20°C or below, and even more preferably -30°C or below.

The rubbery polymer is specifically exemplified by polybutadiene, polyisoprene, diene-based copolymer (styrene-butadiene copolymer, acrylonitrile-butadiene copolymer, acryl-butadiene rubber, etc.); copolymer of olefin and other unsaturated monomer, such as copolymer of ethylene and α-olefin having 3 or more carbon atoms (ethylene-propylene copolymer, ethylene-butene copolymer, ethylene-octene copolymer, etc.), copolymer of olefin and other unsaturated monomer (ethylene-methacrylate copolymer, ethylene-butyl acrylate copolymer, etc.), and copolymer of olefin and vinyl ether compound; terpolymer of ethylene and propylene and non-conjugated diene; acryl rubber (polybutyl acrylate, poly(2-ethylhexyl acrylate), butyl acrylate-2-ethylhexyl acrylate copolymer, etc.); silicone-based rubber (polyorganosiloxane rubber, IPN-type composite rubber composed of polyorganosiloxane rubber and polyalkyl (meth)acrylate rubber). Only one kind of them may be used independently, or two or more kinds of them may be used in a combined manner.

These copolymers may have, and preferably have, epoxy group or glycidyl group introduced therein.

Note that in this invention, (meth)acrylate means acrylate and methacrylate, and (meth)acrylic acid means acrylic acid and methacrylic acid.

In this invention, the elastomer may be of any type including graft copolymer, random copolymer, or block copolymer, and is particularly preferable if it is a graft copolymer composed of a rubbery polymer and a copolymerizable monomer component grafted thereto. The graft copolymer may be manufactured by any method selectable from bulk polymerization, solution polymerization, suspension polymerization and emulsion polymerization. Style of copolymerization may be either single-stage grafting or multi-stage grafting.

Specific examples of the monomer component that are copolymerizable with the rubbery polymer include aromatic vinyl compound; vinyl cyanide compound; (meth)acrylate ester compound; (meth)acrylate compound; epoxy group-containing (meth)acrylate ester compound such as glycidyl (meth)acrylate; maleimide compounds such as maleimide, N-methyl maleimide, and N-phenyl maleimide; and α,β-unsaturated carboxylic acids such as maleic acid, phthalic acid and itaconic acid, and anhydrides thereof (for example, maleic anhydride, etc.). Only a single kind of these monomer components may be used, or two or more kinds thereof may be used in a combined manner. Among them, aromatic vinyl compound, vinyl cyanide compound, (meth)acrylate ester compound, and (meth)acrylate compound are preferred from the viewpoint of mechanical characteristics and outer appearance. (Meth)acrylate ester compound is more preferred. The (meth)acrylate ester compound is exemplified by methyl (meth)acrylate, ethyl (meth)acrylate, butyl (meth)acrylate, cyclohexyl (meth)acrylate, and octyl (meth)acrylate.

The graft copolymer is preferably those of core/shell type from the viewpoints of impact resistance and outer appearance. Among them, particularly preferred is a core/shell-type graft copolymer having a core layer composed of at least one kind of rubber component selected from polybutadiene-containing rubber, polybutyl acrylate-containing rubber, polyorganosiloxane rubber, and IPN-type composite rubber composed of polyorganosiloxane rubber and polyalkyl acrylate rubber, and a shell layer formed by copolymerizing (meth)acrylate ester around the core layer. The core/shell-type graft copolymer preferably contains 40% by mass or more of the rubber component, wherein the content is more preferably 60% by mass or more, and preferably contains 10% by mass or more of (meth)acrylic acid. Note in the core/shell-type in the context of this invention, the core layer and the shell are not always necessarily clearly discriminable, and instead widely and conceptually encompasses compounds obtainable by grafting the rubber component around a core-forming part.

Preferred examples of such core/shell-type graft copolymer include methyl methacrylate-butadiene-styrene copolymer (MBS), methyl methacrylate-acrylonitrile-butadiene-styrene copolymer(MABS), methyl methacrylate-butadiene copolymer (MB), methyl methacrylate-acryl rubber copolymer (MA), methyl methacrylate-acryl rubber-styrene copolymer (MAS), methyl methacrylate-acryl butadiene rubber copolymer, methyl methacrylate-acryl butadiene rubber-styrene copolymer, and methyl methacrylate-(acryl silicone IPN rubber) copolymer. Only one kind of the rubbery polymer may be used, or two or more kinds thereof may be used in a mixed manner.

Such elastomers are exemplified by "Paraloid (registered trademark, same as below) EXL2602", "Paraloid EXL2603", "Paraloid EXL2655", "Paraloid EXL2311", "Paraloid EXL2313", "Paraloid EXL2315", "Paraloid KM330", "Paraloid KM336P", and "Paraloid KCZ201" from Rohm and Haas Japan Ltd.; "Metablen (registered trademark, same as below) C-223A", "Metablen E-901", "Metablen S-2001", "Metablen SRK-200" from Mitsubishi Rayon Co., Ltd.; "KANE ACE (registered trademark, same as below) M-511", "KANE ACE M-600", "KANE ACE M-400", "KANE ACE M-580", "KANE ACE M-711", "KANE ACE MR-01" from Kaneka Corporation; and "UBESTA XPA" from UBE Industries, Ltd.

From the viewpoint of impact resistance, the elastomer in this invention is also preferably a copolymer of olefin and other unsaturated monomer, such as copolymer of ethylene and α-olefin having 3 or more carbon atoms (ethylene-propylene copolymer, ethylene-butene copolymer, ethylene-octene copolymer, etc.); and copolymer of olefin and other unsaturated monomer (ethylene-methacrylate copolymer, ethylene-butyl acrylate copolymer, etc.). Among them, also these copolymers having epoxy group or glycidyl group are preferred.

The copolymer having epoxy group or glycidyl group is obtainable by a method of copolymerizing an olefin with an unsaturated monomer having epoxy group or glycidyl group; or a method of copolymerizing an olefin polymer with an unsaturated monomer having epoxy group or glycidyl group. The epoxy group or glycidyl group may be introduced by oxidizing an unsaturated bond, which resides at the terminal of the olefin polymer, or resides in the copolymer or composite of the olefin and other unsaturated monomer, using hydrogen peroxide or organic peroxyacid, such as perbenzoic acid, performic, and peracetic acid.

The olefin is exemplified by ethylene, propylene, 1-butene, isobutylene, 2-butene, cyclobutene, 1-pentene, 1-hexene, 4-methyl-1-pentene, 3-methyl-1-butene, 4-methyl-1-butene, cyclopentene, 1-hexene, cyclohexene, 1-octene, 1-decene, and 1-dodecene. Only one kind of these compounds may be used, or two or more kinds thereof may be used in a combined manner.

Among these olefins, ethylene is particularly preferred.

The unsaturated monomer having epoxy group or glycidyl group is exemplified by unsaturated carboxylic acids such as glycidyl acrylate and glycidyl methacrylate; ether compounds such as vinyl glycidyl ether, allyl glycidyl ether, methacryl glycidyl ether, 2-methylpropenyl glycidyl ether, and styrene-p-glycidyl ether; glycidyl cinnamate, glycidyl itaconate, and N-[4-(2,3-epoxypropoxy)-3,5-dimethyl benzyl]methacryl amide. Only one kind of these compounds may be used, or two or more kinds thereof may be used in a combined manner. Among them, unsaturated carboxylic acids are preferred, and glycidyl acrylate and glycidyl methacrylate are particularly preferred.

The elastomer is preferably a copolymer having copolymerized therein an unsaturated monomer free of epoxy group or glycidyl group, such as alkyl acrylate and alkyl methacrylate, besides the unsaturated monomer having epoxy group or glycidyl group.

In this invention, ethylene-alkyl acrylate-glycidyl methacrylate copolymer is particularly preferred.

Such elastomer is exemplified by Elvaloy AS from DuPont Mitsui Polychemicals Co., Ltd, BF-7M from Sumitomo Chemical Co., Ltd., and AX8900 from Arkema S.A.

For other details of the elastomer, descriptions in paragraphs [0080] to [0086] of WO2017/110458 may be referred to, the contents of which are incorporated by reference into this patent specification.

Content of the elastomer, when contained in the resin composition, is preferably 1 part by mass or more, per 100 parts by mass of the thermoplastic resin, and may be 5 parts by mass or more, or 8 parts by mass or more. The upper limit value of the content is preferably 30 parts by mass or below, more preferably 25 parts by mass or below, and even more preferably 22 parts by mass or below. Only one kind of these elastomers may be used, or two or more kinds thereof may be used in a combined manner. When two or more kinds are used, the total content preferably falls within the aforementioned ranges.

### «Epoxy Compound»

The resin composition also preferably contains an epoxy compound. In an exemplary case where two or more kinds of thermoplastic resins, such as polyester-based resin (A-1) and the polyamide-based resin (A-2), are blended, the epoxy compound acts as a compatibilizer to improve hydrolytic resistance, and, strength or durability of weld part in the molded article.

The epoxy compound, having one or more epoxy groups in one molecule, will suffice, for which typically used are glycidyl compounds which are reaction products of epichlorohydrin with alcohol, phenols or carboxylic acid; and compounds epoxydated at an olefinic double bond.

Preferred examples of the epoxy compound include bisphenol-type epoxy compounds such as bisphenol A-type epoxy compound, and bisphenol F-type epoxy compound; as well as resorcinol-type epoxy compound, novolac-type epoxy compound, alicyclic compound-type diepoxy compound, glycidyl ethers, glycidyl esters, and epoxydated polybutadiene. Bisphenol A-type epoxy compound is preferred.

The bisphenol A-type epoxy compound is exemplified by bisphenol A-diglycidyl ether, and hydrogenated bisphenol A-diglycidyl ether, which is marketed under the trade name of "ADK CIZER EP-17" from ADEKA Corporation. Also a product marketed under the trade name of "Epikote 1003" from Mitsubishi Chemical Corporation is preferred. The bisphenol F-type epoxy compound is exemplified by bisphenol F-diglycidyl ether, and hydrogenated bisphenol F-diglycidyl ether.

The resorcinol-type epoxy compound is exemplified by resorcinol diglycidyl ether.

The novolac-type epoxy compound is exemplified by phenol novolac-type epoxy compound, and cresol novolac-type epoxy compound.

The alicyclic compound-type compound is exemplified by vinylcyclohexene dioxide, dicyclopentadiene oxide, 3,4-epoxycyclohexyl-3,4-cyclohexyl carboxylate, bis(3,4-epoxycyclohexylmethyl) adipate, vinylcyclohexene diepoxide, and 3,4-epoxycyclohexylglycidyl ether.

The glycidyl ethers are specifically exemplified by monoglycidyl ethers such as methyl glycidyl ether, butyl glycidyl ether, 2-ethylhexyl glycidyl ether, decyl glycidyl ether, stearyl glycidyl ether, phenyl glycidyl ether, butylphenyl glycidyl ether, and allyl glycidyl ether; as well as neopentyl glycol diglycidyl ether, ethylene glycol diglycidyl ether, glycerin diglycidyl ether, propylene glycol diglycidyl ether, and bisphenol A diglycidyl ether.

The glycidyl esters are exemplified by monolycidyl esters such as glycidyl benzoate and glycidyl sorbate; as well as diglycidyl adipate, diglycidyl terephthalate, and diglycidyl orthophthalate.

The epoxydated butadiene is exemplified by epoxydated polybutadiene, epoxydated styrene-butadiene-based copolymer, and epoxydated hydrogenated styrene-butadiene-based copolymer.

The epoxy compound may be a copolymer having as one component a glycidyl group-containing compound. Exemplified are copolymer composed of glycidyl ester of α,β-unsaturated acid, and one, or two or more kinds of monomers selected from the group consisting of α-olefin, acrylic acid, acrylate ester, methacrylic acid, and methacrylate ester.

The epoxy compound preferably has an epoxy equivalent of 100 to 2000 g/eq, and a molecular weight (which means mass average molecular weight for polymer, same as below regarding the epoxy compound) of 2,000 or smaller. With the epoxy equivalent controlled to 100 g/eq or larger, the amount of epoxy group is optimized, the resin composition will have reduced viscosity, and the weld part will have improved adhesiveness. Meanwhile, with the epoxy equivalent controlled to 2000 g/eq or smaller, the resin composition will have further improved hydrothermal resistance. With the molecular weight (mass average molecular weight) controlled to 2,000 or smaller, the compatibility with the polyester-based resin (A-1) tends to improve, and the mechanical strength of the molded article tends to improve.

A first embodiment of the epoxy compound in this invention is an epoxy compound (preferably bisphenol A-type epoxy compound) having an epoxy equivalent of 1,000 to 2,000 g/eq, and a mass average molecular weight of 1,000 to 2,000.

A second embodiment of the epoxy compound in this invention is an epoxy compound (preferably bisphenol A-type epoxy compound) having an epoxy equivalent of 100 to 250 g/eq, and a molecular weight of 100 to 500.

The epoxy compound is more preferably bisphenol A-type epoxy compound and novolac-type epoxy compound, which are obtainable by reaction of bisphenol A or novolac with epichlorohydrin. Bisphenol A-type epoxy compound is more preferred.

It is particularly preferable in this invention to employ two or more kinds of bisphenol A-type epoxy compound with different molecular weights in a combined manner. With such structure, the hydrolytic resistance and compatibility with the polyamide resin tend to improve.

The bisphenol A-type epoxy compound having a lower molecular weight (occasionally referred to as "low-molecular-weight epoxy compound", hereinafter) preferably has a molecular weight of 100 to 700, meanwhile the bisphenol A-type epoxy compound having a higher molecular weight (occasionally referred to as "high-molecular-weight epoxy compound", hereinafter) preferably has a mass average molecular weight of exceeding 700, and 20000 or smaller.

Mass ratio of the low-molecular-weight epoxy compound and the high-molecular-weight epoxy compound (low-molecular-weight epoxy compound/high-molecular-weight epoxy compound) is preferably 0.05 to 1.0, and more preferably 0.1 to 1.0. Within these ranges, the hydrolytic resistance and compatibility with the polyamide resin tend to further improve.

Content of the epoxy compound is preferably 0.1 parts by mass or more, per 100 parts by mass of the thermoplastic resin, which is more preferably 0.2 parts by mass or more, and may be 2.5 parts by mass or more, and even may be 2.8 parts by mass or more. The upper limit value of the content is preferably 10 parts by mass or below, more preferably 8 parts by mass or below, even more preferably 6 parts by mass or below, and yet more preferably 5 parts by mass or below.

Only one kind of these epoxy compounds may be used, or two or more kinds thereof may be used in a combined manner. When two or more kinds are used, the total content preferably falls within the aforementioned ranges.

### «Talc»

The resin composition may further contain talc.

With the talc blended therein, the obtainable thermoplastic resin member will have improved dimensional stability and appearance of product. Even with a reduced content of the LDS additive, the resin composition will have improved platability on the thermoplastic resin member and will have accelerated growth of plating. The talc may be surface-treated with at least one compound selected from organo-hydrogen polysiloxanes and organopolysiloxanes. In this case, the amount of adhesion of the siloxane compound on the talc is preferably 0.1 to 5% by mass of the talc.

The talc preferably has a number-average particle size smaller than the ten-point average roughness Rz of the surface irregularity of the metal member.

The talc preferably has a number-average particle size of 50 µm or smaller, which is more preferably 25 µm or smaller, and even more preferably 10 µm or smaller. The lower limit value is preferably 1 µm or above, and more preferably 2 µm or above.

The talc usually has a scaly form, wherein the average particle size is determined on the basis of the length measured at the longest part. The number-average particle size of the talc is determined from measured values of particle size, obtained by randomly choosing the talc to be measured in an image observed under an electron microscope, and by measuring the particle size thereof, under a magnification of 1,000×, with a sampled number of particles of 1,000 or larger.

Content of the talc, when blended, in the resin composition is preferably 1 to 50 parts by mass, per 100 parts by mass of the thermoplastic resin, which is more preferably 2 to 35 parts by mass, and even more preferably 5 to 30 parts by mass.

Content of the talc, when blended, in the thermoplastic resin is preferably 0.1 parts by mass or more, per 100 parts by mass of the LDS additive, which is more preferably 10 parts by mass or more, even more preferably 15 parts by mass or more, may be 30 parts by mass or more, and even may be 50 parts by mass or more. The upper limit value of the talc content is preferably 200 parts by mass or below, per 100 parts by mass of the LDS additive, which is more preferably 180 parts by mass or below, even more preferably 100 parts by mass or below, and yet more preferably 90 parts by mass or below. For the talc having the surface thereof treated with siloxane, the content of such siloxane-treated talc preferably falls within the aforementioned ranges.

Meanwhile, also a composition substantially free of talc is acceptable in this invention. "Substantially free of talc" means that the content of talc in the resin composition is 5% by mass or less of the content of LDS additive, which is more preferably 3% by mass or less, even more preferably 1% by mass or less, and yet more preferably 0.1% by mass or less. With such structure substantially free of talc, the metal bonding strength tends to improve desirably.

### «Stabilizer»

The resin composition preferably contains a stabilizer.

The stabilizer is exemplified by various ones including phosphorus-containing stabilizer, sulfur-containing stabilizer, and phenol-based stabilizer. Particularly preferred are phosphorus-containing stabilizer and phenol-based stabilizer.

Content of the stabilizer is preferably 0.001 to 2 parts by mass, per 100 parts by mass of the thermoplastic resin. With the content of stabilizer controlled to 0.001 parts by mass or more, the thermoplastic resin member tends to further improve the thermal stability, and effectively suppresses the molecular weight from decreasing and the hue from degrading, during molding. Meanwhile, with the content controlled to 2 parts by mass or less, silver streaks are effectively suppressed from occurring, making it possible to effectively suppress the hue degradation. Content of the stabilizer is more preferably 0.01 to 1 part by mass, and even more preferably 0.1 to 0.8 parts by mass.

Only a single kind of the stabilizers may be used, or two or more kinds thereof may be used. When two or more kinds are used, the total content preferably falls within the aforementioned ranges.

The phosphorus-containing stabilizer is exemplified by phosphorous acid, phosphoric acid, phosphite, phosphate ester, and metal salts of them. Among them, organic phosphate compound, organic phosphite compound or organic phosphonite compound, as well as metal salts thereof are preferred. Organic phosphate compound and metal salts of them are particularly preferred. The metal is exemplified by zinc and aluminum, wherein zinc is preferred.

The organic phosphate compound is preferably a compound represented by formula (1) below, and a metal salt thereof.
[Chemical Formula 1]

**O=P(OH)ₙ(OR')₃₋ₙ** (1)

(In formula (1), R¹ represents an alkyl group or aryl group, and n represents an integer of 0 to 2. When n=0, three (R¹)s may be same or different. When n=1, two (R¹)s may be same or different.)

The metal salt of the compound represented by formula (1) is exemplified by zinc salt. The metal salt preferably forms the salt using hydroxy groups owned by the compound represented by formula (1). For example, two OH groups are preferably bound to zinc to form an -O-Zn-O- structure.

In formula (1), R¹ represents an alkyl group or aryl group, and more preferably represents an alkyl group typically having one or more, preferably two or more, and usually 30 or less, and preferably 25 or less carbon atoms, or, an aryl group having 6 or more, and usually 30 or less carbon atoms. R¹ more preferably represents the alkyl group, rather than the aryl group. When there are two or more (R¹) s, the individual (R¹) s may be same or different.

The organic phosphate compound represented by formula (1) is more preferably exemplified by those whose R¹ represents a long-chain alkyl acid phosphate compound having 8 to 30 carbon atoms. Specific examples of the alkyl group having 8 to 30 carbon atoms include octyl group, 2-ethylhexyl group, isooctyl group, nonyl group, isononyl group, decyl group, isodecyl group, dodecyl group, tridecyl group, isotridecyl group, tetradecyl group, hexadecyl group, octadecyl group, eicosyl group, and triacontyl group.

The long-chain alkyl acid phosphate is exemplified by octyl acid phosphate, 2-ethylhexyl acid phosphate, decyl acid phosphate, lauryl acid phosphate, octadecyl acid phosphate, oleyl acid phosphate, behenyl acid phosphate, phenyl acid phosphate, nonyl phenyl acid phosphate, cyclohexyl acid phosphate, phenoxy ethyl acid phosphate, alkoxypolyethylene glycol acid phosphate, bisphenol A acid phosphate, dimethyl acid phosphate, diethyl acid phosphate, dipropyl acid phosphate, diisopropyl acid phosphate, dibutyl acid phosphate, dioctyl acid phosphate, di-2-ethylhexyl acid phosphate, dioctyl acid phosphate, dilauryl acid phosphate, distearyl acid phosphate, diphenyl acid phosphate, bisnonyl phenyl acid phosphate, and metal salts of these compounds.

Among them, octadecyl acid phosphate is preferred, and such stabilizer is marketed under the trade name of "Adekastab AX-71" from ADEKA Corporation. Also stearyl acid phosphate zinc salt is preferred, and such stabilizer is marketed under the trade name of "JP-518Zn" from Johoku Chemical Co., Ltd.

Content of the phosphorus-containing stabilizer is preferably 0.001 to 1 part by mass, per 100 parts by mass of the thermoplastic resin in total, which is more preferably 0.01 to 0.6 parts by mass, and even more preferably 0.1 to 0.5 parts by mass.

Only a single kind of the phosphorus-containing stabilizers may be used, or two or more kinds thereof may be used. When two or more kinds are used, the total content preferably falls within the aforementioned ranges.

Blending of the phosphorus-containing stabilizer is particularly preferred in a case where the polyester-based resin (A-1) is polybutylene terephthalate, and polycarbonate-based resin (A-3) is blended, since transesterification between them may be suppressed moderately. In another case where the polyester-based resin (A-1) is polybutylene terephthalate, and polycarbonate-based resin (A-3) is blended, it is preferable to combine the phosphorus-containing stabilizer and the phenol-based stabilizer.

The phenol-based stabilizer is preferably hindered phenol-based stabilizer, which is exemplified by pentaerythritol tetrakis[3-(3,5-di-*tert*-butyl-4-hydroxyphenyl) propionate], octadecyl-3-(3,5-di-*tert*-butyl-4-hydroxyphenyl) propionate, thiodiethylenebis[3-(3,5-di-*tert*-butyl-4-hydroxyphenyl) propionate], N,N'-hexane-1,6-diylbis[3-(3,5-di-tert-butyl-4-hydroxyphenyl)propionamide], 2,4-dimethyl-6-(1-methyl pentadecyl)phenol, diethyl[[3,5-bis(1,1-dimethyl ethyl)-4-hydroxyphenyl]methyl]phosphonate, 3,3',3",5,5',5"-hexa-tert-butyl-a,a',a"-(mesitylene-2,4,6-triyl)tri-*p*-cresol, 4,6-bis(octylthiomethyl)-*o*-cresol, ethylenebis(oxyethylene)bis[3-(5-*tert*-butyl-4-hydroxy-*m*-tolyl) propionate], hexamethylenebis[3-(3,5-di-*tert*-butyl-4-hydroxyphenyl) propionate], 1,3,5-tris(3,5-di-*tert-*butyl-4-hydroxybenzyl)-1,3,5-triazine-2,4,6(1H,3H,5H)-trione, 2,6-di-*tert*-butyl-4-(4,6-bis(octylthio)-1,3,5-triazine-2-ylamino)phenol, and 2-[1-(2-hydroxy-3,5-di-*tert-*pentylphenyl)ethyl]-4,6-di-*tert*-pentylphenyl acrylate.

Among them, pentaerythritol tetrakis[3-(3,5-di-*tert*-butyl-4-hydroxyphenyl) propionate], and octadecyl-3-(3,5-di-*tert*-butyl-4-hydroxyphenyl) propionate are preferred. Such phenol-based stabilizer is specifically exemplified by "Irganox 1010" (trade name, same as below), "Irganox 1076" from BASF SE; and "Adekastab AO-50", "Adekastab AO-60" from ADEKA Corporation.

Only one kind of the phenol-based stabilizers may be contained, or two or more kinds are combined in any combination and ratio.

Content of the phenol-based stabilizer is preferably 0.01 to 1 part by mass, per 100 parts by mass of the thermoplastic resin. With the content controlled to 0.01 parts by mass or more, the thermal stability tends to improve, meanwhile with the content controlled to 1 part by mass or less, the amount of emission of gas will more likely be reduced. The content is more preferably 0.05 parts by mass or more per 100 parts by mass of the thermoplastic resin, which is more preferably 0.1 parts by mass or more, meanwhile 0.8 parts by mass or less, and even may be 0.7 parts by mass or less.

Only a single kind of the phenol-based stabilizers may be used, or two or more kinds thereof may be used. When two or more kinds are used, the total content preferably falls within the aforementioned ranges.

### «Mold Releasing Agent»

The resin composition (thermoplastic resin member) also preferably contains a mold releasing agent.

The mold releasing agent employed here may be any of known ones usually used for thermoplastic resin. Among them, one or more kinds of mold releasing agent selected from polyolefin-based compound, fatty acid ester-based compound, silicone-based compound and aliphatic metal salt-based compound is preferred.

The polyolefin-based compound is exemplified by compounds selected from paraffin-based wax and polyethylene-based wax. Among them, those having a mass average molecular weight of 700 to 10,000, and further 900 to 8,000, are preferred. Also modified polyolefin-based compounds having hydroxy group, carboxy group, anhydride group, epoxy group or the like introduced in the side chains thereof, are particularly preferred.

The fatty acid ester-based compound is exemplified by fatty acid esters such as glycerin fatty acid esters, sorbitan fatty acid esters, and pentaerythritol fatty acid ester, as well as partially saponified products thereof. Among them, mono- or di-fatty acid ester composed of fatty acids having 11 to 28, preferably 17 to 21 carbon atoms is preferred. Specific examples include glycerin monostearate, glycerin monobehenate, glycerin dibehenate, glycerin-12-hydroxymonostearate, sorbitan monobehenate, pentaerythritol distearate, and pentaerythritol tetrastearate.

The silicone-based compound is preferably a modified compound, from the viewpoint of compatibility with the polyester-based resin (A-1). Modified silicone oil is exemplified by silicon oil having an organic group introduced into a side chain of polysiloxane, and silicone oil having an organic group introduced at both terminals and/or one terminal of polysiloxane. The organic group to be introduced is exemplified by epoxy group, amino group, carboxy group, carbinol group, methacryl group, mercapto group, and phenol group. Epoxy group is preferred. The modified silicone oil is preferably a silicone oil having an epoxy group introduced into a side chain of polysiloxane.

The aliphatic metal salt-based compound is exemplified by fatty acid metal salts and fatty acid esters including calcium stearate, zinc stearate, magnesium stearate, lead stearate, aluminum stearate, sodium montanate, and montanate-based wax, wherein preferred are calcium stearate, zinc stearate, magnesium stearate, lead stearate, aluminum stearate, sodium montanate, and montanic acid-based wax. Fatty acid wax having 10 to 34 carbon atoms is preferred, and montanic acid-based wax is more preferred.

Content of the mold releasing agent is preferably 0.05 to 2 parts by mass, per 100 parts by mass of the thermoplastic resin 100 parts by mass. With the content controlled to 0.05 parts by mass or more, the surface quality is effectively prevented from degrading due to mold releasing failure during melt molding, meanwhile, with the content controlled to 2 parts by mass or less, the resin composition will become more easily kneaded, and the obtainable thermoplastic resin member will be effectively suppressed from degassing. Content of the mold releasing agent is preferably 0.05 to 1.5 parts by mass, per 100 parts by mass of the thermoplastic resin, which is more preferably 0.1 to 1.0 parts by mass.

Only a single kind of the mold releasing agents may be used, or two or more kinds thereof may be used. When two or more kinds are used, the total content preferably falls within the aforementioned ranges.

### <<Flame retardant Composition>>

The thermoplastic resin composition used in this invention may contain a flame retardant composition. The flame retardant composition may be solely composed of a flame retardant, or may have a flame retardant and a flame retardant promoter combined therein. Each of the flame retardant and the flame retardant promoter may be of a single kind, or two or more kinds.

The flame retardant and/or the flame retardant promoter contained in the flame retardant composition used in this invention is exemplified by halogen-containing flame retardant, organometal salt-based flame retardant, phosphorus-containing flame retardant, silicone-based flame retardant, antimony-containing flame retardant or flame retardant promoter. In a case where the polyamide resin or polyester-based resin is used as the thermoplastic resin, preferably blended is a halogen-containing flame retardant or phosphorus-containing flame retardant. Meanwhile, in a case where the polycarbonate-based resin is used as the thermoplastic resin, preferably used is phosphorus-containing flame retardant, or organometal salt-based flame retardant.

Preferred examples of the halogen-containing flame retardant include bromine-containing flame retardant, which is exemplified by brominated polycarbonate, brominated epoxy resin, brominated phenoxy resin, brominated polyphenylene ether resin, brominated polystyrene resin, brominated bisphenol A, glycidyl brominated bisphenol A, pentabromobenzyl polyacrylate, and brominated imide. Among them, more preferred are brominated polycarbonate, brominated polystyrene resin, glycidyl brominated bisphenol A, and pentabromobenzyl polyacrylate, which are more likely to suppress impact resistance from degrading.

The phosphorus-containing flame retardant is exemplified by metal salt of ethyl phosphinate, metal salt of diethyl phosphinate, melamine polyphosphate, condensed phosphate ester, and phosphazene compound, among which, condensed phosphate ester or phosphazene is preferred. Alternatively, for the purpose of suppressing degassing or mold deposit during molding, as well as breed-out of the flame retardant, a thermoplastic resin that excels in compatibility with the phosphorus-containing flame retardant may be blended. Such thermoplastic resin is preferably polyphenylene ether resin, polycarbonate-based resin, or styrene-based resin.

The condensed phosphate ester is preferably a compound represented by formula (10) below: 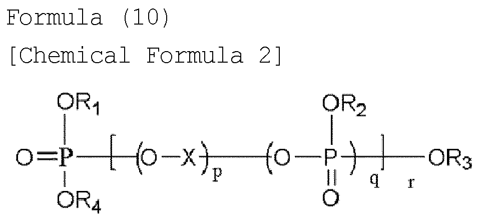 (where, each of R₁, R₂, R₃ and R₄ independently represents a hydrogen atom or an organic group, excluding the case where all of R₁, R₂, R₃ and R₄ represent hydrogen atoms. X represents a divalent organic group, p represents 0 or 1, q represents an integer of 1 or larger, and r represents an integer of 0 or 1 or larger.)

In formula (10), the organic group is exemplified by substituted, or non-substituted alkyl group, cycloalkyl group, and aryl group. Substituent is exemplified by alkyl group, alkoxy group, alkylthio group, aryl group, aryloxy group, arylthio group, halogen atom, and halogenated aryl group. Also employable are groups that combine these substituents, and groups having these substituents combined using oxygen atom, sulfur atom, nitrogen atom or the like. The divalent organic group means a di- or higher valent group given by eliminating one carbon atom from an organic group, and is exemplified by alkylene group, phenylene group, substituted phenylene group, and polynucluear phenylene group such as derived from bisphenols.

The condensed phosphate ester represented by formula (10) is exemplified by various compounds including trimethyl phosphate, triethyl phosphate, tributyl phosphate, trioctyl phosphate, triphenyl phosphate, tricresyl phosphate, tricresyl phenyl phosphate, octyldiphenyl phosphate, diisopropylphenyl phosphate, tris(chloroethyl) phosphate, tris(dichloropropyl) phosphate, tris(chloropropyl) phosphate, bis(2,3-dibromopropyl) phosphate, bis(2,3-dibromopropyl)-2,3-dichloro phosphate, bis(chloropropyl) monooctyl phosphate, bisphenol A tetraphenyl phosphate, bisphenol A tetracresyl diphosphate, bisphenol A tetraxylyl diphosphate, hydroquinone tetraphenyl diphosphate, hydroquinone tetracresyl phosphate, and hydroquinone tetraxylyl diphosphate.

Commercialized condensed phosphate esters include those marketed under trade names of "CR733S" (resolcinolbis(diphenyl phosphate)), "CR741" (bisphenol A bis(diphenyl phosphate)) and "PX-200" (resolcinol bis(dixylylenyl phosphate)) from Daihachi Chemical Industry Co., Ltd.; and "Adekastab FP-700" (phenol condensate of 2,2-bis(p-hydroxyphenyl)propane-trichlorophosphine oxide polycondensate (degree of polymerization of 1 to 3)) from ADEKA Corporation, which are easily available.

The phosphazene compound is an organic compound having in the molecule thereof -P=N- bonds, and is preferably at least one compound selected from a cyclic phosphazene compound represented by formula (1) below; a chain-like phosphazene compound represented by formula (2) below; and a crosslinked phosphazene compound in which at least one kind of phosphazene compounds selected from the group consisting of those represented by formulae (1) and (2) below are crosslinked by a crosslinking group.

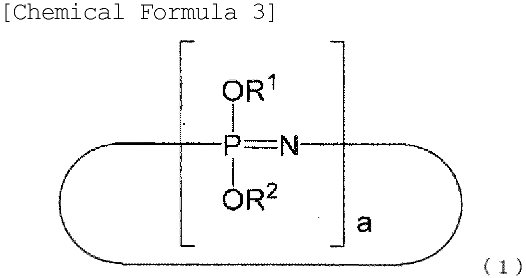

In formula (1), "a" represents an integer of 3 to 25. R¹ and R² may be same or different, and represent an alkyl group, cycloalkyl group, alkenyl group, alkynyl group, allyloxy group, amino group, hydroxy group, aryl group or alkyl aryl group.

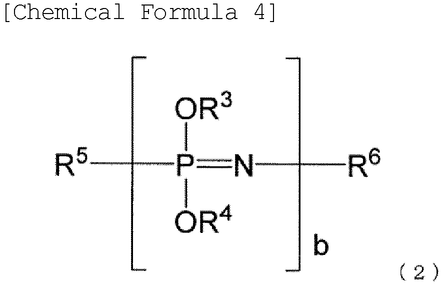

In formula (2), "b" represents an integer of 3 to 10000. R³ and R⁴ may be same or different, and represent an alkyl group, cycloalkyl group, alkenyl group, alkynyl group, allyloxy group, amino group, hydroxy group, aryl group or alkylaryl group.

R⁵ represents at least one group selected from-N=P(OR³)₃ group, -N=P(OR⁴)₃ group, -N=P(O)OR³ group, and -N=P(O)OR⁴ group. R⁶ represents at least one group selected from-P(OR³)₄ group, -P(OR⁴)₄ group, -P(O)(OR³)₂ group, and -P(O)(OR⁴)₂ group.

In the formulae (1) and (2), the alkyl group is exemplified by a methyl group, ethyl group, propyl group, isopropyl group, butyl group, t-butyl group, pentyl group, hexyl group, octyl group, decyl group, and dodecyl group. Alkyol groups having 1 to 6 carbon atoms, such as methyl group, ethyl group, propyl group, isopropyl group, butyl group, t-butyl group, pentyl group, and hexyl group are preferred, and alkyl groups having 1 to 4 carbon atoms such as methyl group, ethyl group and propyl group are particularly preferred.

The cycloalkyl group is exemplified by those having 5 to 14 carbon atoms such as cyclopentyl group and cyclohexyl group. Cycloalkyl groups having 5 to 8 carbon atoms are more preferred.

The alkenyl group is exemplified by those having 2 to 8 carbon atoms such as vinyl group and allyl group. The cycloalkenyl group is exemplified by those having 5 to 12 carbon atoms such as cyclopentyl group and cyclohexyl group.

The alkynyl group is exemplified by those having 2 to 8 carbon atoms such as ethynyl group and propynyl group; and those having an aryl group as a substituent, such as ethynylbenzene group.

The aryl group is exemplified by those having 6 to 20 carbon atoms, such as phenyl group, methylphenyl (or, tolyl) group, dimethylphenyl (or, xylyl) group, trimethylphenyl group and naphthyl group. Among them, aryl groups having 6 to 10 carbon atoms are preferred, and phenyl group is more preferred.

The alkylaryl group is exemplified by those having 6 to 20 carbon atoms, such as benzyl group, phenethyl group, and phenylpropyl group. Among them, aralkyl groups having 7 to 10 carbon atoms are preferred, and benzyl group is particularly preferred.

Among them, preferred are the phosphazene compounds having R¹ and R² in formulae (1), and R³ and R⁴ in formula (2), representing an aryl group or an aryl alkyl group. By using such aromatic phosphazene, the thermoplastic resin composition will have effectively improved thermal stability. From this point of view, each of R¹, R², R³ and R⁴ preferably represents an aryl group, and particularly a phenyl group.

The cyclic and/or chain-like phosphazene compounds represented by formulae (1) and (2) are exemplified by phenoxy phosphazene; (poly)tolyloxy phosphazenes such as o-tolyloxy phosphazene, m-tolyloxy phosphazene and p-tolyloxyphosphazene; (poly)xylyloxy phosphazenes such as o,m-xylyloxy phosphazene, o,p-xylyloxy phosphazene and m,p-xylyloxy phosphazene; (poly)phenoxytolyloxy phosphazenes such as o,m,p-trimethylphenyloxy phosphazene, phenoxy(o-tolyloxy) phosphazene, phenoxy(m-tolyloxy) phosphazene and phenoxy(p-tolyloxy) phosphazene; (poly)phenoxytolyloxy xylyloxy phosphazenes such as phenoxy(o,m-xylyloxy) phosphazene, phenoxy(*o*,*p*-xylyloxy) phosphazene and phenoxy(m,p-xylyloxy) phosphazene; and phenoxy(o,m,p-trimethylphenyloxy) phosphazene. Cyclic and/or chain-like phenoxy phosphazene are preferred.

The cyclic phosphazene compound represented by formula (1) is most preferably a cyclic phenoxyphosphazene having R¹ and R² representing a phenyl group. Such cyclic phenoxyphosphazene compound is exemplified by compounds such as phenoxy cyclotriphosphazene, octaphenoxy cyclotetraphosphazene, and decaphenoxy cyclopentaphosphazene, which are obtainable for example by allowing ammonium chloride and phosphorus pentachloride to react at 120 to 130°C to obtain a mixture of cyclic and straight-chain chlorophosphazenes, then by extracting the cyclic chlorophosphazenes such as hexachlorocyclotriphosphazene, octachlorocyclotetraphosphazene, and decachlorocyclopentaphosphazene, and then substituting them with phenoxy groups. The cyclic phenoxyphosphazene compound is preferably a compound whose "a" in formula (1) represents an integer of 3 to 8, and may be a mixture of compounds having different values for "a".

The "a" preferably has an average value of 3 to 5, which is more preferably 3 or 4. Particularly preferred is a mixture of compounds that contains 50% by mass or more of a compound with a=3, 10 to 40% by mass of a compound with a=4, and 30% by mass or less in total of compounds with a=5 or larger.

The chain-like phosphazene compound represented by formula (2) is most preferably chain-like phenoxyphosphazene whose R³ and R⁴ representing a phenyl group. Such chain-like phenoxyphosphazene compound is exemplified by a compound obtainable for example by subjecting the hexachlorocyclotriphosphazene, obtained by the aforementioned method, to ring-opening polymerization at 220 to 250°C, and by substituting the obtained straight-chain dichlorophosphazene having a degree of polymerization of 3 to 10000 with phenoxy groups. The straight-chain phenoxyphosphazene compound preferably has a value of "b" in formula (2) of 3 to 1000, which is more preferably 3 to 100, and even more preferably 3 to 25.

The crosslinked phosphazene compound is exemplified by compounds having a crosslinking structure made of 4,4'-diphenylene group, such as compounds having a crosslinking structure made of 4,4'-sulfonyldiphenylene (or, bisphenol-S residue); compounds having a crosslinking structure made of 2,2-(4,4'-diphenylene)isopropylidene group; compounds having a crosslinking structure made of 4,4'-oxydiphenylene group; and compounds having a crosslinking structure made of 4,4'-thiodiphenylene group.

The crosslinked phosphazene compound is preferably a crosslinked phenoxyphosphazene compound in which a cyclic phenoxyphosphazene compound, having phenyl groups for R¹ and R² in formula (1), is crosslinked with the crosslinking group; or a crosslinked phenoxyphosphazene compound in which a chain-like phenoxyphosphazene, having phenyl groups for R³ and R⁴ in formula (2), is crosslinked with the crosslinking group, from the viewpoint of flame retardancy. The crosslinked phenoxyphosphazene compound in which the cyclic phenoxyphosphazene compound is crosslinked with the crosslinking group is more preferred.

Content of phenylene group in the crosslinked phenoxyphosphazene compound is usually 50 to 99.9%, and preferably 70 to 90%, on the basis of the total number of phenyl groups and phenylene groups in the cyclic phosphazene compound represented by formula (1), and/or the chain-like phenoxyphosphazene compound represented by formula (2). The crosslinked phenoxyphosphazene compound is most preferably a compound having no free hydroxy group in the molecule.

In this invention, the phosphazene compound is selected from the group consisting of the cyclic phenoxyphosphazene compound represented by formula (1), and the crosslinked phenoxyphosphazene compound in which the cyclic phenoxyphosphazene compound represented by formula (1) is crosslinked by a crosslinking group, from the viewpoint of flame retardancy and mechanical characteristics of the thermoplastic resin composition.

The phosphazene compound commercially available is exemplified by FP-110 from FUSHIMI Pharmaceutical Co., Ltd.

The organometal salt-based flame retardant is preferably organoalkali metal salt compound, or organoalkali earth metal salt compound (alkali metal and alkali earth metal are collectively referred to as "alkali (earth) metal", hereinafter). The organometal salt-based flame retardant is exemplified by metal sulfonate, metal carboxylate, metal borate, and metal phosphate. Among them, metal sulfonate is preferred from the viewpoint of thermal stability when added to the aromatic polycarbonate-based resin. Metal perfluoroalkanesulfonate is particularly preferred.

The metal sulfonate is exemplified by lithium (Li) sulfonate, sodium (Na) sulfonate, potassium (K) sulfonate, rubidium (Rb) sulfonate, cesium (Cs) sulfonate, magnesium (Mg) sulfonate, calcium (Ca) sulfonate, strontium (Sr) sulfonate, and barium (Ba) sulfonate. Among them, sodium (Na) sulfonate and potassium (K) sulfonate are particularly preferred.

Such metal sulfonates are exemplified by alkali (earth) metal aromatic sulfonate compounds such as dipotassium diphenylsulfone-3,3'-disulfonate, potassium diphenylsulfone-3-sulfonate, sodium benzenesulfonate, sodium (poly)styrenesulfonate, sodium paratoluenesulfonate, sodium (branched) dodecylbenzenesulfonate, sodium trichlorobenzenesulfonate, potassium benzenesulfonate, potassium styrenesulfonate, potassium (poly)styrenesulfonate, potassium paratoluenesulfonate, potassium (branched) dodecylbenzenesulfonate, potassium trichlorobenzenesulfonate, cesium benzenesulfonate, cesium (poly)styrenesulfonate, cesium paratoluenesulfonate, cesium (branched) dodecylbenzenesulfonate, and cesium trichlorobenzenesulfonate; and metal perfluoroalkanesulfonate such as alkali metal perfluoroalkanesulfonate including potassium perfluorobutanesulfonate (alkane preferably has 2 to 6 carbon atoms). Among them, particularly preferred are dipotassium diphenylsulfone-3,3'-disulfonate, potassium diphenylsulfone-3-sulfonate, sodium paratoluenesulfonate, potassium paratoluenesulfonate, and potassium perfluorobutanesulfonate, from the viewpoint of good balance between transparency and flame retardancy. Metal perfluoroalkanesulfonate such as potassium perfluorobutanesulfonate is particularly preferred.

The antimony-containing flame retardant or the flame retardant promoter is an antimony-containing compound that contributes to flame retardancy. Specific examples include antimony oxides such as antimony trioxide (Sb₂O₃), antimony tetroxide and antimony pentaoxide (Sb₂O₅) ; as well as sodium antimonate and antimony phosphate. Among them, antimony oxides are preferred for their high moist heat resistance. Antimony trioxide is further preferably used.

The flame retardant promoter, other than those described above, are exemplified by copper oxide, magnesium oxide, zinc oxide, molybdenum oxide, zirconium oxide, tin oxide, iron oxide, titanium oxide, aluminum oxide, and zinc borate. Among them, zinc borate is preferred for its higher flame retardancy.

Amount of use (ratio by mass) of the flame retardant promoter is preferably 0.3 to 1.1 relative to the flame retardant, which is more preferably 0.4 to 1.0.

Content of the antimony-containing flame retardant or the flame retardant promoter, when contained, is preferably 0.1 to 25 parts by mass per 100 parts by mass of the thermoplastic resin, which is more preferably 1 to 15 parts by mass.

Amount of use (ratio by mass of the antimony-containing flame retardant or flame retardant promoter, relative to the halogen-containing flame retardant is preferably 1:0.3 to 1.1, and is more preferably 1:0.4 to 1.0.

The amount of mixing of the flame retardant composition is preferably 0.01 parts by mass to 40 parts by mass, per 100 parts by mass of the resin component, which is more preferably 1 to 40 parts by mass, more preferably 5 to 50 parts by mass, even more preferably 6 to 35 parts by mass, and yet more preferably 7 to 30 parts by mass.

In particular in a case where organometal salt-based flame retardant is used as the flame retardant composition, the content is preferably 0.01 to 1 part by mass, per 100 parts by mass of the resin component.

### «Anti-Dripping Agent»

The thermoplastic resin composition used in this invention may contain an anti-dripping agent. The anti-dripping agent, which is preferably polytetrafluoroethylene (PTFE), is an agent having fibril forming ability, capable of easily dispersing into the resin composition, and showing a tendency of mutually boning the resin to produce a fibrous material. Polytetrafluoroethylene is specifically exemplified by "Teflon (registered trademark) 6J" and "Teflon (registered trademark) 30U" marketed by DuPont Mitsui Fluorochemicals Co., Ltd.; "Polyflon (trade name)" marketed by Daikin Chemical Industries, Ltd.; and "Fluon" marketed by AGC, Inc.

Content ratio of the anti-dripping agent is preferably 0.01 to 20 parts by mass, per 100 parts by mass of the thermoplastic resin. The anti-dripping agent when controlled to 0.1 parts by mass or more tends to improve flame retardancy, and when controlled to 20 parts by mass or less tends to improve appearance. The content ratio of anti-dripping agent is more preferably 0.05 to 10 parts by mass per 100 parts by mass of the thermoplastic resin, and is more preferably 0.08 to 5 parts by mass.

### «Silicate Mineral»

The thermoplastic resin composition used in this invention may contain a silicate mineral other than talc. In this invention, mixing of the silicate mineral may enhance the flexural strength. The silicate mineral is not specifically limited so long as it is a mineral containing silicon and oxygen (O), and is exemplified by mica and wollastonite.

The silicate mineral used in this invention preferably has a particle or fiber form, with either number-average particle size or average particle size of 1 to 30 µm, which is more preferably 2 to 20 µm. The silicate mineral preferably has an aspect ratio of 3 to 30, which is more preferably 5 to 20.

The silicate mineral used in this invention may be surface-treated with at least one kind of compounds selected from polyorganohydrogen siloxanes and polyorganosiloxanes.

Amount of mixing of the silicate mineral, when mixed, is preferably 0.1 parts by mass or more per 100 parts by mass of the resin component, more preferably 5 parts by mass or more, even more preferably 10 parts by mass or more, yet more preferably 20 parts by mass or more, and even may be 30 parts by mass or more. The upper limit value is preferably 60 parts by mass or below, more preferably 50 parts by mass or below, and even more preferably 45 parts by mass or below.

The thermoplastic resin composition used in this invention may contain only one kind of the silicate mineral, or may contain two or more kinds. When two or more kinds are contained, the total content falls within the aforementioned ranges. For the silicate mineral with a treated surface, the total amount of surface treatment preferably falls within the aforementioned range.

### «Other Effective Ingredients»

The resin composition may contain other additives other than those described above, without largely affecting the effects of this invention. Such other additives are exemplified by UV absorber, filler other than the glass-based filler, antistatic agent, anti-clouding agent, dye/pigment, fluorescent brightener, lubricant, anti-blocking agent, fluidity modifier, plasticizer, dispersion aid, and antibacterial agent. Two or more of these additives may be combined. As for flame retardant and flame retardant promoter, descriptions in paragraphs [0060] to [0063] and [0082] to [0085] of WO2017/038409 may be referred to, the contents of which are incorporated by reference into this patent specification.

### <Method for Manufacturing Resin Composition>

Method employable for manufacturing the resin composition is widely selectable from known methods for manufacturing thermoplastic resin composition without special limitation. More specifically, the individual ingredients may preliminarily mixed using any of various mixers such as tumbler and Henschel mixer, and then melt-kneaded using Banbury mixer, roll mixer, Brabender mixer, single screw kneading extruder, twin screw kneading extruder, or kneader, to thereby manufacture the resin composition.

Alternatively, the resin composition may be manufactured by feeding the individual ingredients, which are not preliminarily mixed or only partially mixed, through a feeder into an extruder, and then melt-kneaded.

Alternatively again, the resin composition may be manufactured typically by preliminarily mixing part of the ingredients and by feeding the mixture to an extruder for melt-kneading, and by mixing the obtained resin composition called master batch with the residual ingredients, followed by melt-kneaded again.

### <Characteristics of Resin Composition>

The resin composition, when formed into an ISO multi-purpose test specimen (4 mm thick) and measured in compliance with ISO 178, preferably has a flexural strength of 80 MPa or larger, which may be 100 MPa or larger, and even may be 120 MPa or larger. The upper limit value of the flexural strength is typically, but not specifically, 250 MPa or below, where a value of 230 MPa or smaller still remains in a sufficiently practical level. The flexural strength is measured according to a method described later in EXAMPLE.

The resin composition, when formed into an ISO multi-purpose test specimen (4 mm thick) and measured in compliance with ISO 178, preferably has a Charpy impact strength (notched) of 3 KJ/m² or larger. The upper limit value of the Charpy impact strength (notched) is typically, but not specifically, 50 KJ/m² or below, where a value of 30 KJ/m² or smaller will remain in a sufficiently practical level. The Charpy impact strength (notched) is measured according to a method described later in EXAMPLE.

The resin composition preferably has a melting point Tm of 200 to 250°C, which is more preferably 210 to 240°C.

The resin composition preferably has a crystallization temperature Tc of 150°C or higher and lower than 200°C, which is more preferably 155 to 195°C.

The resin composition preferably has a difference between the melting point Tm and the crystallization temperature Tc (Tm-Tc) of 20°C or larger, and also preferably 60°C or smaller. The lower limit value of Tm-Tc is more preferably 25°C or above, which is even more preferably 30°C or above. Meanwhile, the upper limit value of Tm-Tc is more preferably 55°C or below, which is even more preferably 50°C or below. With such structure, bonding strength with the metal member tends to improve.

The melting point Tm and the crystallization temperature Tc are measured in a pellet form by DSC, both under a heating speed and a cooling speed of 20°C/min, while being held at 300°C for 3 minutes. The measurement more specifically complies with a method described later in EXAMPLE.

In a case where two or more kinds of thermoplastic resin are contained, the melting point of a resin whose melting point is the lowest preferably satisfy the aforementioned Tm, and the crystallization temperature of a resin whose crystallization temperature is the highest preferably satisfy the aforementioned Tc. Hence, Tm-Tc given by Tm of a resin whose melting point is the highest, and Tc of a resin whose crystallization temperature is the highest, preferably falls within the aforementioned ranges.

### <Plating Layer>

The metal-resin composite of this invention preferably has a plating layer on a surface of the thermoplastic resin member, and in an area not in contact with the metal member. FIG. 2 illustrates an exemplary metal-resin composite of this invention, where reference sign 1 represents the metal member, reference sign 2 represents a thermoplastic resin member, and reference sign 3 represents the plating layer. In this invention, the plating layer on a surface of the thermoplastic resin member is usually formed by laser direct structuring. The thermoplastic resin member may have any shape, which may be flat, partially or entirely curved, or three-dimensionally intricate profile.

Laser to be irradiated on the thermoplastic resin member is not specifically limited, and is suitably selectable from known lasers including YAG laser and excimer laser. YAG laser is preferred. The laser may have wavelength not specifically limited. The wavelength preferably ranges from 200 nm to 1200 nm, and particularly from 800 nm to 1200 nm.

Upon irradiation of the laser, the thermoplastic resin member will have an activated area only within the irradiated area. Depending on types of the thermoplastic resin, surface roughening may occur, which is advantageous for the subsequent formation of the plating layer. The thermoplastic resin member is immersed in a plating bath, preceded or not preceded by a cleaning process, and is plated with copper, nickel, gold, silver, or palladium, by electroless plating (or eletroplating), preferably with copper, to thereby form the plating layer only in the area irradiated by laser.

The thermoplastic resin member in this invention conceptually encompasses not only final product, but also various components. The thermoplastic resin member is featured by its high impact resistance, rigidity and heat resistance, and may be given small anisotropy and small warp, on which the laser direct structuring may be applied to form a circuit with line intervals of 1 mm or narrower, and further 150 µm or narrower (with an unspecified lower limit, typically 30 µm or above).

This invention also enables formation of a boardless circuit, since the thermoplastic resin member can be mechanically strengthened.

### <Anodizing>

The metal-resin composite of this invention is preferably anodized. In the aforementioned FIG. 2, reference sign 4 represents an anodizing layer formed by anodizing. As a result of anodizing, the face of metal part will be effectively prevented from being oxidized, degraded or corroded.

The anodizing may be carried out by any of unspecified methods, typically by dipping the metal-resin composite in an electrolytic solution, and allowing weak AC, DC or DC-AC current to pass while connecting the metal member on the positive pole. The electrolytic solution is exemplified by solutions of sulfuric acid, oxalic acid, and other organic acids.

During the anodizing, also the thermoplastic resin member will substantially be anodized together. In this invention, resistance against anodizing may be enhanced by controlling the percentage of the polyester-based resin (A-1) in the thermoplastic resin to 55% by mass or more.

Although the anodizing in this invention is preferably effected on the face of the metal member, the metal-resin composite to be anodized, when having the plating layer, may have the anodizing layer also on the face of such plating layer. Alternatively, the metal-resin composite having no plating layer may be anodized, and then may have the plating layer formed thereon. In this case, the plating layer is formed on the thus treated face of the thermoplastic resin member. Alternatively again, the metal-resin composite having no plating layer may be anodized, then plated, and may further be anodized.

The anodizing is effective for the metal member made of aluminum or aluminum alloy. That is, the metal-resin composite of this invention is more preferably alumite-treated.

The anodizing usually forms an oxide film of approximately 5 to 25 µm thick, which is suitably adjustable by controlling current to be applied and time.

### <Resist Layer>

The metal-resin composite of this invention may further have a resist layer. The resist layer is formed on the thermoplastic resin member. After the resist layer is developed conforming to a desired pattern, the thermoplastic resin member is etched conforming to the pattern. Etching may employ any of known etching methods. Holes formed by the etching in the thermoplastic resin member will be filled with a metal, enabling formation of a metal interconnect between the metal member or the plating layer, with other electrode or the like.

### <Characteristics of Metal-Resin Composite>

The metal-resin composite of this invention preferably has a bonding strength, measured conforming to the ISO 19095, of 10 MPa or larger, which even may be 13 MPa or larger, which may be 15 MPa or larger and may be 20 MPa or larger. The upper limit of bonding strength is not specifically limited, where values of 60 MPa or smaller, and even 50 MPa or smaller, and particularly 44 MPa or smaller will remain in a sufficiently practical level. The bonding strength is measured according to a method described later in EXAMPLE.

### Method for Manufacturing Metal-Resin Composite

This invention also discloses a method for manufacturing a metal-resin composite.

The method for manufacturing a metal-resin composite of this invention includes treating upon laser to the surface on a metal member and forming a thermoplastic resin member, by applying on a laser-treated surface of the metal member a molten resin composition, the resin composition comprising 1 to 25 parts by mass of a laser direct structuring additive (B), per 100 parts by mass of a thermoplastic resin (A).

Molding machine employed when the resin composition is applied to the metal member is not specifically limited so long as it can form the metal-resin composite made of the metal member and the resin composition, and is selectable from various molding machines including injection molding machine, extrusion molding machine, hot press molding machine, compression molding machine, transfer molding machine, casting molding machine, and reaction injection molding machine. Among them, injection molding machine is particularly preferred. That is, a process for applying a molten resin composition onto the metal member having an irregularly-profiled surface is preferably carried out by injection molding.

The injection molding is specifically, and preferably, carried out by insert molding, by which the metal member is inserted in a cavity of an injection molding die, and the resin composition is injected into the die. More specifically, a molding die is prepared, the die is opened and the metal member is placed (inserted) in a part of the die, the die is then closed, the resin composition is then injected into the die, so that at least a part of the resin composition comes into contact with the irregularly-profiled face of the metal member, and is allowed to solidify. The die is opened thereafter, and the content is released, to thereby obtain the metal-resin composite.

Size of the metal member to be inserted may be suitably determined depending on size and structure of the target metal-resin composite. The metal member to be inserted does not necessarily extend over the entire range of the obtainable metal-resin composite, and instead may compose a part of the metal-resin composite.

For improved bonding strength, it is preferable to select the temperature of the molten resin composition during insert molding as close as possible to the temperature of the metal member. The metal member is preferably pre-heated, although the method for which is not specifically limited. Methods of heating, although not specifically limited, include a method by which the metal member preliminarily heated using induction heating, infrared radiation heating, hot plate, heating oven, or laser before being subjected to insert molding; a method by which the metal member is inserted, and then the metal member is externally heated at around a region thereof to be bonded with the resin composition, using a halogen lamp or dryer; and a method by which the metal member is heated using for example a cartridge heater built in a die. In particular, local heating only at around the region to be bonded with the resin composition is meaningful. Note that "local heating" encompasses a mode in which the region to be bonded, and also a circumferential region around it may be heated depending on means of heating, but without heating a region of the metal member far from the region to be bonded.

The higher the heating temperature the better, wherein it is usually 100 to 350°C, preferably 120 to 250°C, and more preferably 130 to 250°C. With the heating temperature controlled to the lower limit value or above, the temperature difference from the die temperature becomes large, and effect of heating is thus exhibited more effectively, meanwhile, with the heating temperature controlled to the upper limit value or below, time for elevating the temperature may be shortened, which tends to improve the molding cycle, and also advantageously makes residence of resin less likely to occur, which is desirable in terms of molding.

Methods for obtaining the metal-resin composite, besides those described above, are also selectable from laser welding, vibration welding, and ultrasonic welding, all of which being methods for heating the metal member or the thermoplastic resin member (resin composition), or both of them to produce the composite. An optimal method is selectable depending on the shape or cost of the composite. In particular, laser welding is preferred since the method enables welding in a local region, as well as local heating.

The method for manufacturing the metal-resin composite further preferably contains a step of forming a plating layer. The method for manufacturing the metal-resin composite further preferably contains anodizing. Steps for forming the plating layer and anodizing may be conducted referring to the descriptions above.

The metal-resin composite of this invention obtainable as described above is not specifically limited regarding the size, shape, thickness and so forth, allowing any shape of plate (circular, polygonal, etc.), column, box, bowl, and tray. The composite does not necessarily has a uniform thickness over the entire range thereof, and may be provided with a reinforcing rib, for example.

### EXAMPLE

This invention will further be explained below, referring to Examples. Materials, amounts of consumption, ratios, process details, and procedures may be modified suitably without departing from the spirit of this invention. The scope of this invention is therefore not limited to the specific examples described below.

Ingredients used in Examples, Reference Example and Comparative Examples below are summarized in Tables 1 and 2 below.

### <Exemplary Manufacture 1>

### (Synthesis of Polyamide (PAMP6))

Adipic acid was melted under heating in a reaction can with a nitrogen atmosphere and kept stirred, and the temperature was elevated to 270°C, while slowly adding dropwise a 3:7 (on molar basis) mixed diamine containing paraxylylene diamine (from Mitsubishi Gas Chemical Company) and metaxylylene diamine (from Mitsubishi Gas Chemical Company) under pressure (0.35 MPa), so as to control the molar ratio of diamine and adipic acid (from Rhodia, Ltd.) to approximately 1:1. Upon completion of the dropwise addition, the pressure was reduced down to 0.06 MPa, the reaction was allowed to continue for 10 minutes, so as to control the content of components having molecular weights of 1,000 or smaller. The content was then taken out in the form of strands, and pelletized using a pelletizer, to obtain a polyamide, which is hereinafter referred to as "PAMP6". The melting point was found to be 257°C.

### <Exemplary Manufacture 2>

### (Synthesis of Polyamide (PAMP10))

Sebacic acid was melted under heating in a reaction can with a nitrogen atmosphere and kept stirred, and the temperature was elevated to 235°C, while slowly adding dropwise a 3:7 (on molar basis) mixed diamine containing paraxylylene diamine (from Mitsubishi Gas Chemical Company) and metaxylylene diamine (from Mitsubishi Gas Chemical Company) under pressure (0.35 MPa), so as to control the molar ratio of diamine and adipic acid to approximately 1:1. Upon completion of the dropwise addition, the reaction was allowed to continue for 60 minutes, so as to control the content of components having molecular weights of 1,000 or smaller. The content was then taken out in the form of strands, and pelletized using a pelletizer, to obtain a polyamide, which is hereinafter referred to as "PAMP10".

**[Table 1]**

| Ingredient | Abbreviation | |
|---|---|---|
| Thermoplastic resin | PBT1 | Polybutylene terephthalate resin (water absorption: 0.09% by mass) from Mitsubishi Engineering-Plastics Corporation Trade name: Novaduran (registered trademark) 5008 Specific viscosity: 0.85 dL/g Terminal carboxy group content: 11 eq/ton |
| | PBT2 | Polybutylene terephthalate resin (water absorption: 0.09% by mass) from Mitsubishi Engineering-Plastics Corporation Trade name: Novaduran (registered trademark) 5026 Specific viscosity: 1.26 dL/g Terminal carboxy group content: 15 eq/ton |
| | IPA PBT | 10 mol% Isophthalate copolymerized polybutylene terephthalate resin (water absorption: 0.11% by mass) from Mitsubishi Engineering-Plastics Corporation Trade name: Novaduran (registered trademark) 5605 Specific viscosity: 0.84 dL/g Terminal carboxy group content: 15 eq/ton |
| | D_PBT | 10 mol% Dimer acid copolymerized polybutylene terephthalate resin (water absorption: 0.08% by mass) from Bell Polyester Products, Inc. Trade name: Bell pet P02120, specific viscosity: 0.98 dL/g Terminal carboxy group content: 46 eq/ton MFR: 9 g/10 min (250°C, 325 gf), |
| | PET | Polyethylene terephthalate resin (water absorption: 0.10% by mass) from Mitsubishi Chemical Corporation, Trade name: Novapet PBK1 Specific viscosity: 0.64 dL/g Terminal carboxy group content: 36 eq/ton |
| Thermoplastic resin | PET2 | Polyethylene terephthalate resin (water absorption: 0.10% by mass) from Mitsubishi Chemical Corporation, Trade name: Novapex (registered trademark) GG500D Specific viscosity: 0.77 dL/g, Terminal carboxy group content: 20 eq/ton |
| | PA6 | Polyamide 6 resin (water absorption: 1.6% by mass) from UBE Industries, Ltd., Trade name: UBE Nylon 1010X1 Relative viscosity: 2.2 |
| | PAMP6 | PAMP6 resin obtained in Exemplary Manufacture 1 (water absorption: 0.8% by mass) Specific viscosity: 2.19 Terminal carboxy group content: 82 µeq/ton |
| | PC1 | Polycarbonate resin (water absorption: 0.24% by mass) from Mitsubishi Engineering-Plastics Corporation Trade name: Novarex (registered trademark) 7030PJ Viscosity-average molecular weight Mv: 30,000 |
| | PC2 | Polycarbonate resin (water absorption: 0.24% by mass) from Mitsubishi Engineering-Plastics Corporation Trade name: Iupilon (registered trademark) H-3000 Viscosity-average molecular weight Mv: 18,000 |
| Thermoplastic resin | PC3 | Polycarbonate resin (water absorption: 0.24% by mass) from Mitsubishi Gas Chemical Company Trade name: Iupilon (registered trademark) S-3000 Viscosity-average molecular weight Mv: 22,000 |
| | ABS | ABS resin, water absorption: (0.30% by mass) from Nippon A&L Inc., Trade name: Suntac AT-08 |
| | PAMP10 | PAMP 10 obtained in Exemplary Manufacture 2 Water absorption: 0.5% by mass Specific viscosity: 2.24 Terminal carboxy group content: 74 µeq/ton |
| LDS additive | LDS-Cu | Copper chromium oxide (CuCr₂O₄) from Shepherd Color Company, Trade name: Black-1G |
| | LDS-Sn | Antimony tin oxide from Keeling & Walker, Trade name: Stanostat CP5C |

**[Table 2]**

| Ingredient | Abbreviation | |
|---|---|---|
| Elastomer | EL1 | Core/shell-type graft copolymer composed of polybutyl acrylate (core)/polymethyl methacrylate (shell) from Rohm and Haas Company, Trade name: EXL2313 |
| | EL2 | Ethylene/n-butyl acrylate/glycidyl methacrylate (EnBAGMA) block copolymer from DuPont, Trade name: Elvaloy AS |
| | EL3 | Silicone acryl core/shell-type elastomer Methyl methacrylate (shell) from Mitsubishi Chemical Corporation: S-2001 |
| | EL4 | Core/shell-type elastomer composed of butadiene-based core and acrylic shell from Kaneka Corporation: Kaneace M711 |
| Glass-based filler | GF1 | from Nippon Electric Glass Co., Ltd, E-glass, Trade name: ECS03T-127 Number average fiber diameter: 13.5 µm, chopped strand cut length: 3 mm Treated with novolac epoxy resin |
| | GF2 | from Nippon Electric Glass Co., Ltd., E-glass, Trade name: ECS03T-296GH Number average fiber diameter: 10 µm, chopped strand cut length: 3 mm |
| | GF3 | from Nippon Electric Glass Co., Ltd., E-glass, Trade name: ECS03T-595 Number average fiber diameter: 13.5 µm, chopped strand cut length: 3 mm |
| Talc | TLC1 | from Hayashi Kasei Co., Ltd., Trade name: Hi-Con talc HA-T0.5 Average particle size: 4 µm (compression talc, apparent specific gravity: 0.5 g/cc) |
| | TLC2 | from Hayashi Kasei Co., Ltd., Trade name: Micron white 5000S Bulk volume: 2.45 mL/g, Average particle size: 4.75 µm |
| Silicate mineral | WN1 | from Kinsei Matec Co., Ltd., Trade name: SH-1250, wollastonite (SiO₂·CaO), aspect ratio: 10-16, average diameter: 4.5-6.5 µm |
| Epoxy compound | EP1 | from Mitsubishi Chemical Corporation, trade name: Epikote 1003 Bisphenol A-diglycidyl ether-type epoxy compound Epoxy equivalent: ca. 670-770 g/eq, mass-average molecular weight: 1300 |
| | EP2 | Bisphenol A-type epoxy compound from ADEKA Corporation, Trade name: EP-17 Epoxy equivalent: 185 g/eq, mass-average molecular weight: 370 |
| Stabilizer | SA1 | Phenol-based stabilizer Octadecyl-3-(3,5-di-*tert*-butyl-4-hydroxyphenyl) propionate from ADEKA Corporation, Trade name: Adekastab AO-50 |
| | SA2 | Phenol-based stabilizer Pentaerythritol tetrakis[3-(3,5-di-*tert*-butyl-4-hydroxyphenyl) propionate] from ADEKA Corporation, Trade name: Adekastab AO-60 |
| | SA3 | Phosphorus-containing stabilizer Zinc stearyl acid phosphate from Johoku Chemical Co., Ltd., Trade name: JP-518Zn |
| | SA4 | Phosphorus-containing stabilizer Octadecyl phosphate from ADEKA Corporation, Trade name: AX-71 |
| Mold releasing agent/ lubricant | MR1 | Pentaerythritol tetrastearate from Cognis Oleochemicals Japan, Ltd., Trade name: LOXIOL VPG861 |
| | MR2 | Calcium montanate from Nitto Kasei Kogyo K.K., Trade name: CSC8CP |
| | MR3 | Paraffin-based wax from Nippon Seiro Co., Ltd., Trade name: HNP0190 |
| Flame retardant | FR1 | Resolcinolbis-2,6-xylenyl phosphate, from ADEKA Corporation, Adekastab FP700 |
| | FR2 | Polytetrafluoroethylene, from Daikin Industries, Ltd., Polyflon FA500H |

### <Examples 1 to 20, Reference Example 1, Comparative Example 1>

### <<Compound>>

The individual ingredients summarized in Table 1 or 2, excluding the glass-based filler, were blended according to the amounts of consumption (all given in parts by mass) summarized in Tables 3 to 5, the mixture was fed to a 30-mm vented twin screw extruder ("TEX30α", from The Japan Steel Works, Ltd.), the glass-based filler was fed through a side feeder, and the materials were kneaded and extruded into strands, at an extruder barrel temperature of 270°C, and a screw speed of 200 rpm, the strands were quenched in a water bath, and the pelletized using a pelletizer, to thereby obtain pellets of each resin composition.

### <<Measurement of Flexural Strength and Charpy Impact Strength (Notched)>>

The thus obtained resin compositions were dried at 120°C for 5 hours, and molded using an injection molding machine ("NEX80", from Nissei Plastic Industrial Co., Ltd.), at a cylinder temperature of 270°C and a die temperature of 130°C for Examples 1 and 14; at a cylinder temperature of 280°C and a die temperature of 90°C for Example 2 and Reference Example 1; at a cylinder temperature of 250°C and a die temperature of 80°C for Examples 3 to 13 and Comparative Example 1; at a cylinder temperature of 290°C and a die temperature of 90°C for Examples 15, 16, 18 and 20; at a cylinder temperature of 270°C and a die temperature of 90°C for Example 17; and, at a cylinder temperature of 280°C and a die temperature of 90°C for Example 19, into an ISO multi-purpose test specimen (4 mm thick).

Using the obtained ISO multi-purpose test specimen (4 mm thick), flexural strength (in MPa) was measured in compliance with ISO 178.

Again using the ISO multi-purpose test specimen (4 mm thick), Charpy impact strength (notched) (in KJ/m²) was measured in compliance with ISO 179.

### <<Measurement of Crystallization Temperature>>

Crystallization temperature (Tc) of the resin composition was measured using a differential scanning calorimeter (DSC), by heating the resin composition in a nitrogen atmosphere at a heating rate of 20°C/min from 30°C to 300°C, holding it at 300°C for 3 minutes, then cooling it at a cooling rate of 20°C/min, to find a temperature at which an exothermic peak observed during cooling reaches the top.

### «Measurement of Melting Point»

Melting point (Tm) of the resin composition was measured using a differential scanning calorimeter (DSC), by heating the resin composition in a nitrogen atmosphere at a heating rate of 20°C/min from 30°C to 300°C, to find a temperature at which an endothermic peak observed during heating hits the bottom.

### <<Tm-Tc>>

Tm-Tc was derived from the measured values. In a case where there were two or more values observed both for the melting point and the crystallization temperature, the lower melting point was employed to represent Tm, and the higher crystallization temperature was employed to represent Tc.

### <<Treatment of Metal Member>>

### <<<Laser Processing>>>

An aluminum plate of 1.5 mm thick (JIS A1050) was processed to produce a surface irregularity, using a fiber laser (MX-Z2000H, from Omron Corporation) having a wavelength of 1062 nm. The surface was scanned three times under several combinations of conditions, within a 20 W output range. The surface of the obtained aluminum plate was observed under a laser microscope (KEYENCE VK-X100) with a 10× objective lens, to measure the surface roughness. The ten-point average roughness Rz was found to be 134 µm.

### <<<Chemical Treatment>>>

An aluminum plate of 1.5 mm thick (JIS A1050) was degreased, and then subjected to chemical treatment (chemical etching) using an aqueous solution that contains several kinds of acids (hydrochloric acid, sulfuric acid and other ingredients) (aluminum etching solution, from Kanto Chemical Co., Inc.), followed by a cleaning process, to obtain an aluminum plate with an irregularly-profiled face. The surface of the obtained aluminum plate was observed under a laser microscope (KEYENCE VK-X100) with a 10× objective lens, to measure the surface roughness. The ten-point average roughness Rz was found to be 37 µm.

### <<Manufacture of Metal-Resin Composite>>

The surface-treated metal member (aluminum plate) was cut into 45 mm long and 12 mm wide in compliance with ISO 19095, and set in a die cavity.

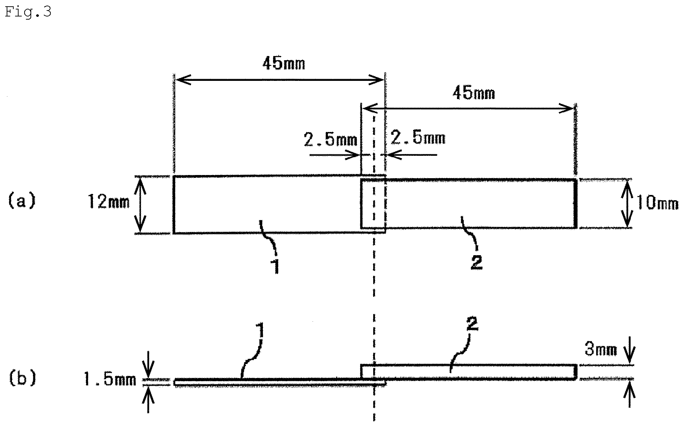

The above-obtained resin pellets (resin composition) were dried at 120°C for 4 hours, and then subjected to insert molding to form a molded article (45 mm long, 10 mm wide, 3 mm thick), so as to be attached to the irregularly-profiled face of the preset aluminum plate, with a bonding area of 5 mm long and 10 mm wide. A metal-resin composite having bonded therein an aluminum plate (metal member) 1 and a resin composition (thermoplastic resin member) 2 as illustrated in FIG. 3 was thus formed. Reference sings used in FIG. 3 are same as those in FIG. 1 and FIG. 2.

The molding was conducted using an injection molding machine ("NEX80", from Nissei Plastic Industrial Co., Ltd.), at a cylinder temperature of 270°C and a die temperature of 130°C for Examples 1 and 14; at a cylinder temperature of 280°C and a die temperature of 100°C for Example 2 and Reference Example 1; at a cylinder temperature of 270°C and a die temperature of 140°C for Examples 3 to 13 and Comparative Example 1; at a cylinder temperature of 290°C and a die temperature of 90°C for Examples 15, 16, 18 and 20; at a cylinder temperature of 270°C and a die temperature of 90°C for Example 17; and, at a cylinder temperature of 280°C and a die temperature of 90°C for Example 19.

### <<Measurement of Bonding Strength>>

Bonding strength was measured in compliance with ISO 19095 by using the thus obtained metal-resin composite.

Measurement was conducted using a tensile tester ("Model 5544", from Instron), in which the metal member (aluminum plate) 1 and the resin composition (thermoplastic resin member) 2, integrated by bonding, were clamped at both longitudinal ends using a tensile jig in compliance with ISO 19095, and pulled at a tensile speed of 5 mm/min and a chuck distance of 80 mm, to find bonding strength (in MPa).

### <<Platability (LDS Performance)>>

The thus obtained metal-resin composite was irradiated, on the side of the thermoplastic resin member, using VMC1 laser irradiation device from Trumpf Corporation (1064 nm YAG laser, with maximum output of 15 W), at an output of 80%, a frequency of 10 kHz, and a scanning speed of 1 m/s. Plating was conducted in an electroless plating bath ENPLATE LDS CU 400 PC from Enthone Inc., at 48°C. The platability (LDS performance) was evaluated by visually observing the thickness of copper deposited over 20 minutes, according to the criteria below:
A: good appearance;
B: plated, but slightly thin (acceptable for practical use); and
C: not plated at all.

### <<Alumite Treatment Resistance>>

The aluminum plate was degreased, and then anodized in sulfuric acid at 20°C, for coloring and sealing treatment. Alumite treatment resistance was evaluated in three levels based on coloration. Coloring failure means loss of gloss, or unintended coloration:
A: good coloration;
B: good coloration, but with partial coloring failure; and
C: coloring failure over most area.
- : not tested.

Results are summarized in Tables 3 to 5 below.

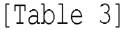

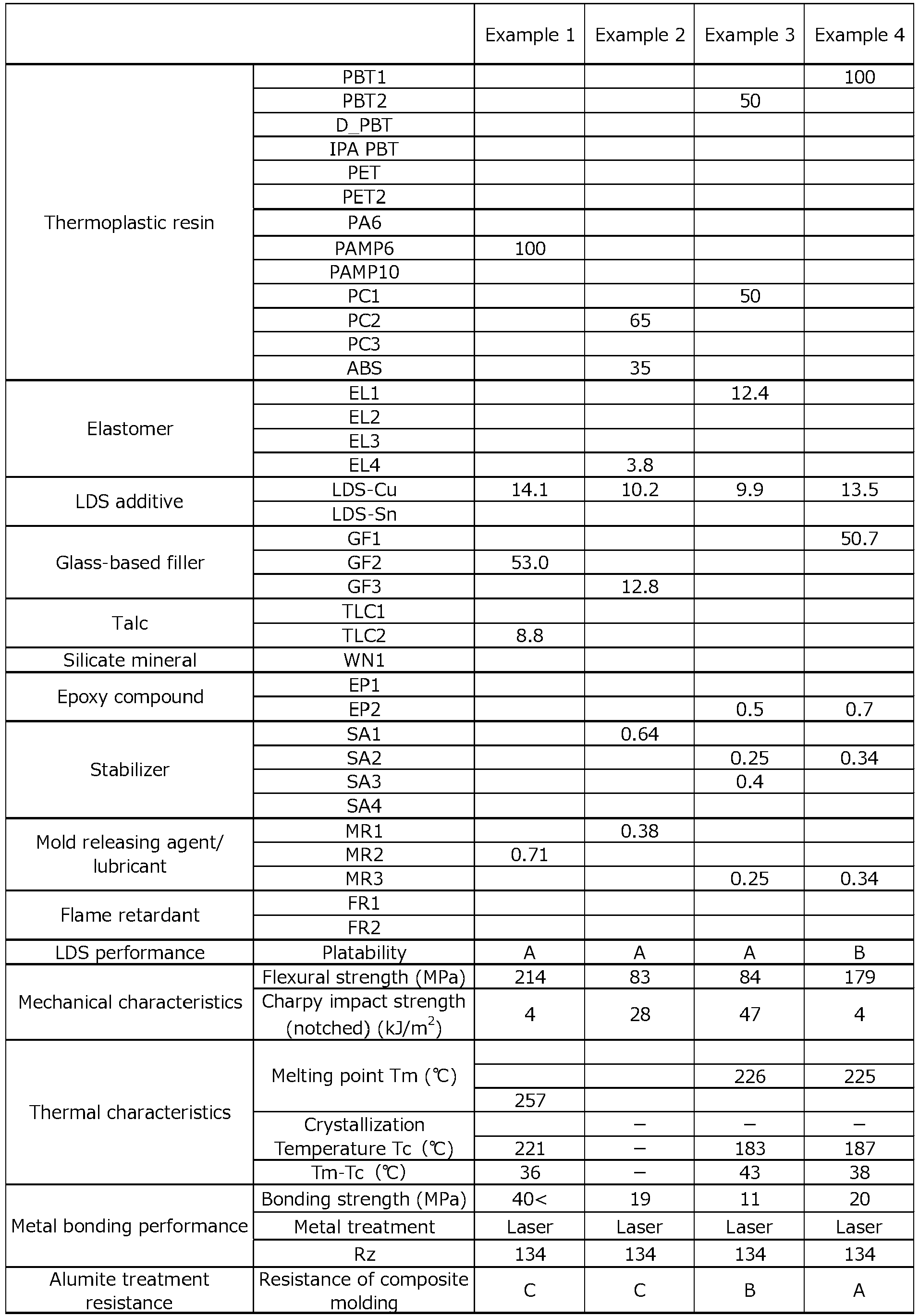

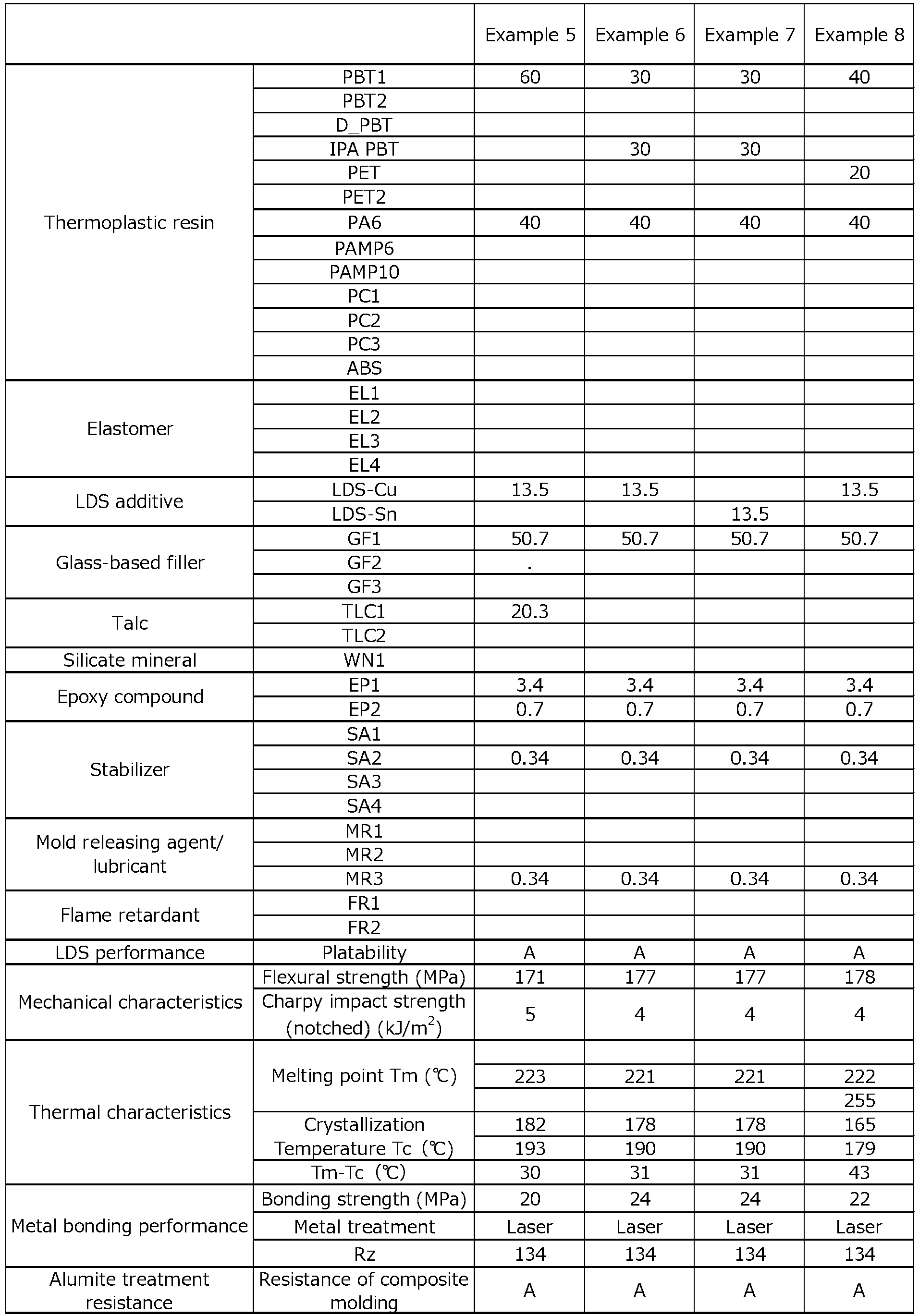

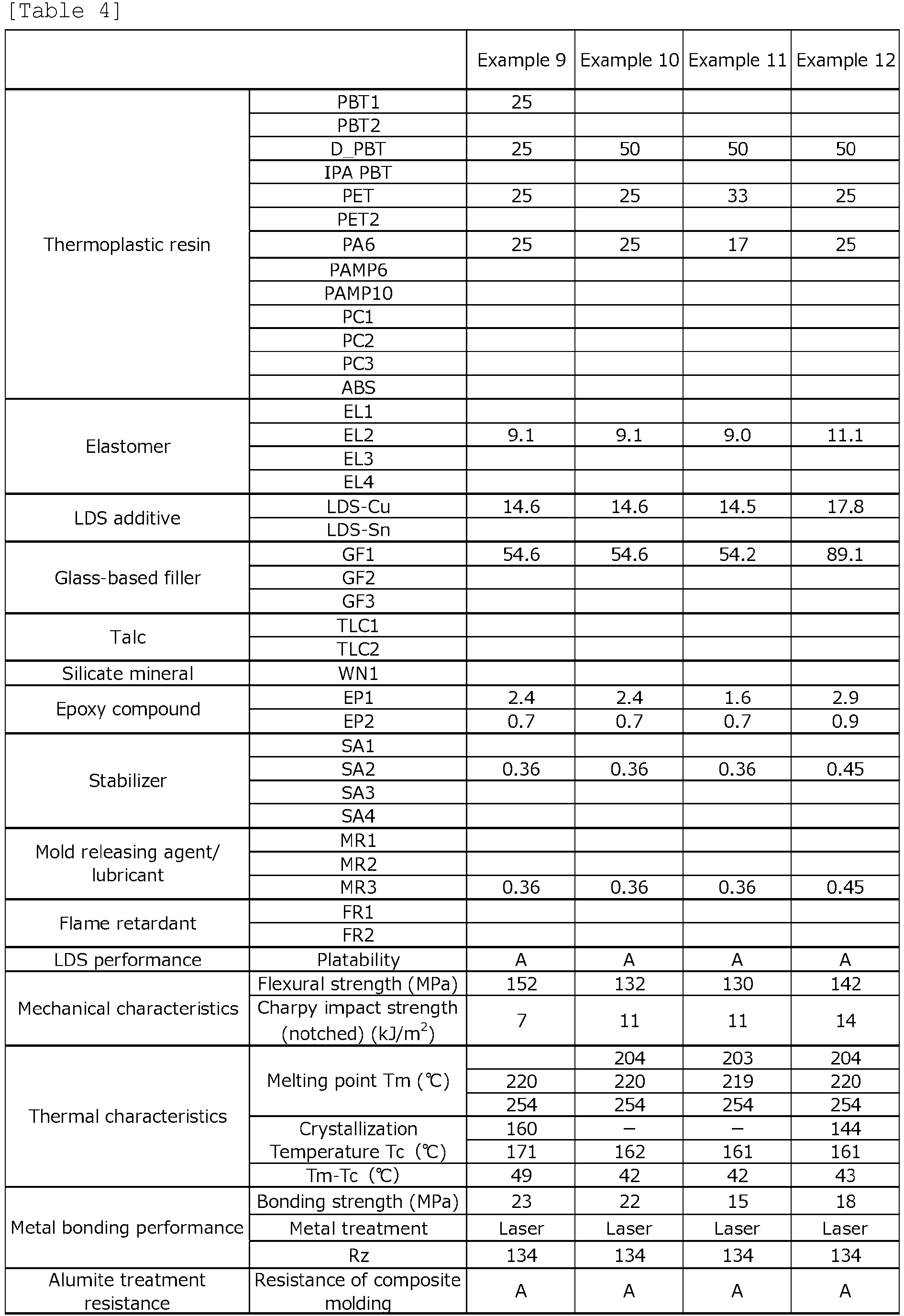

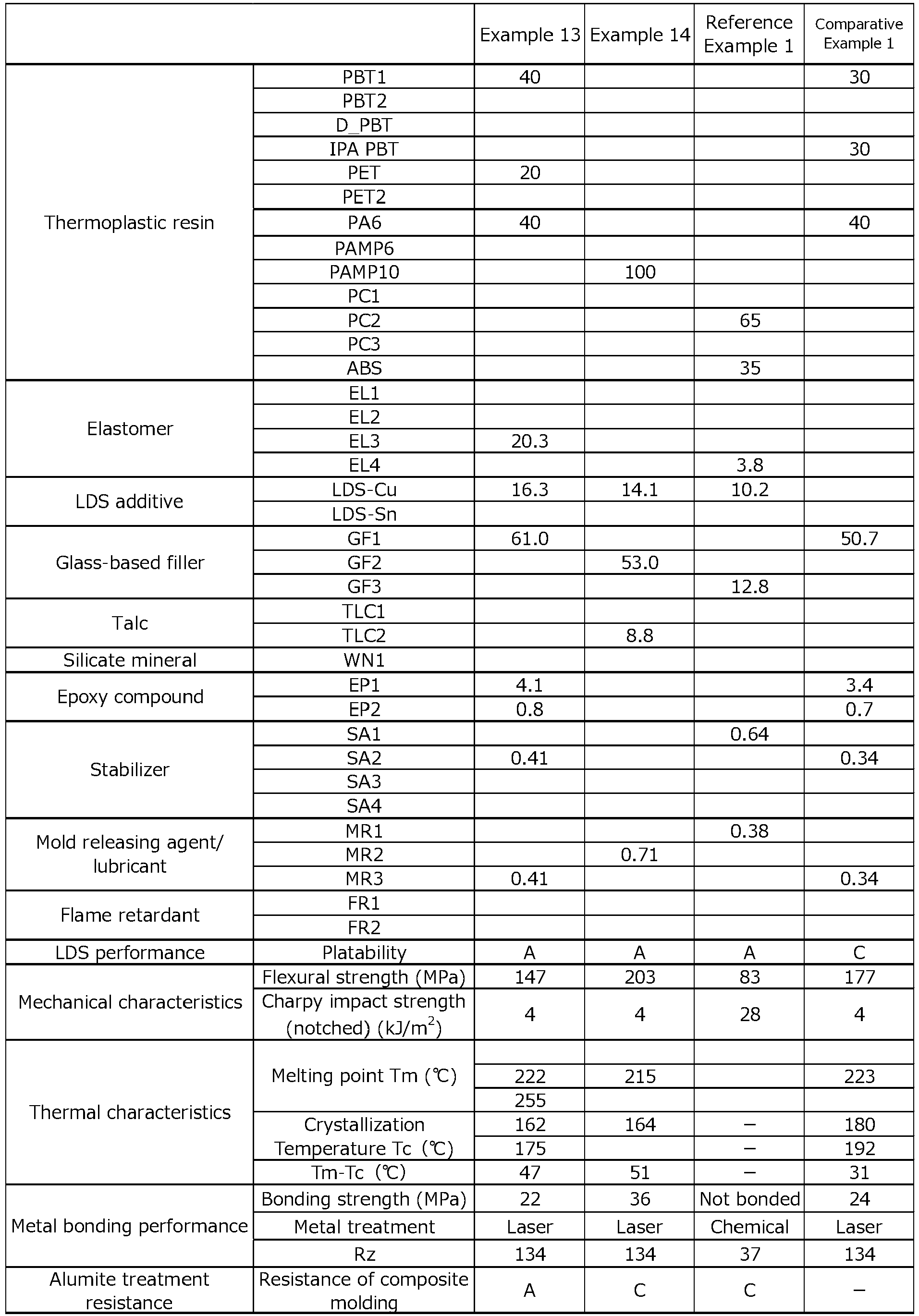

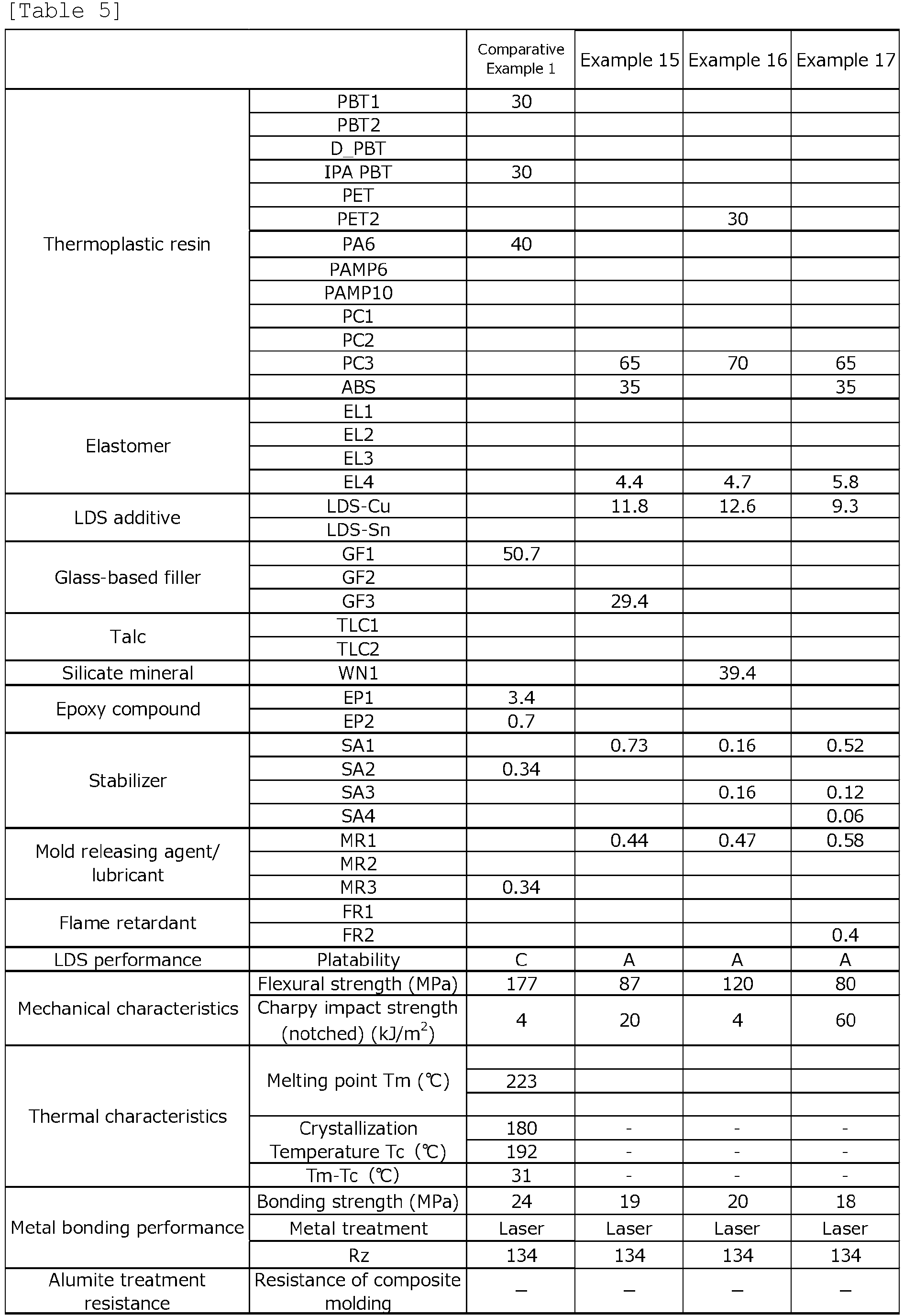

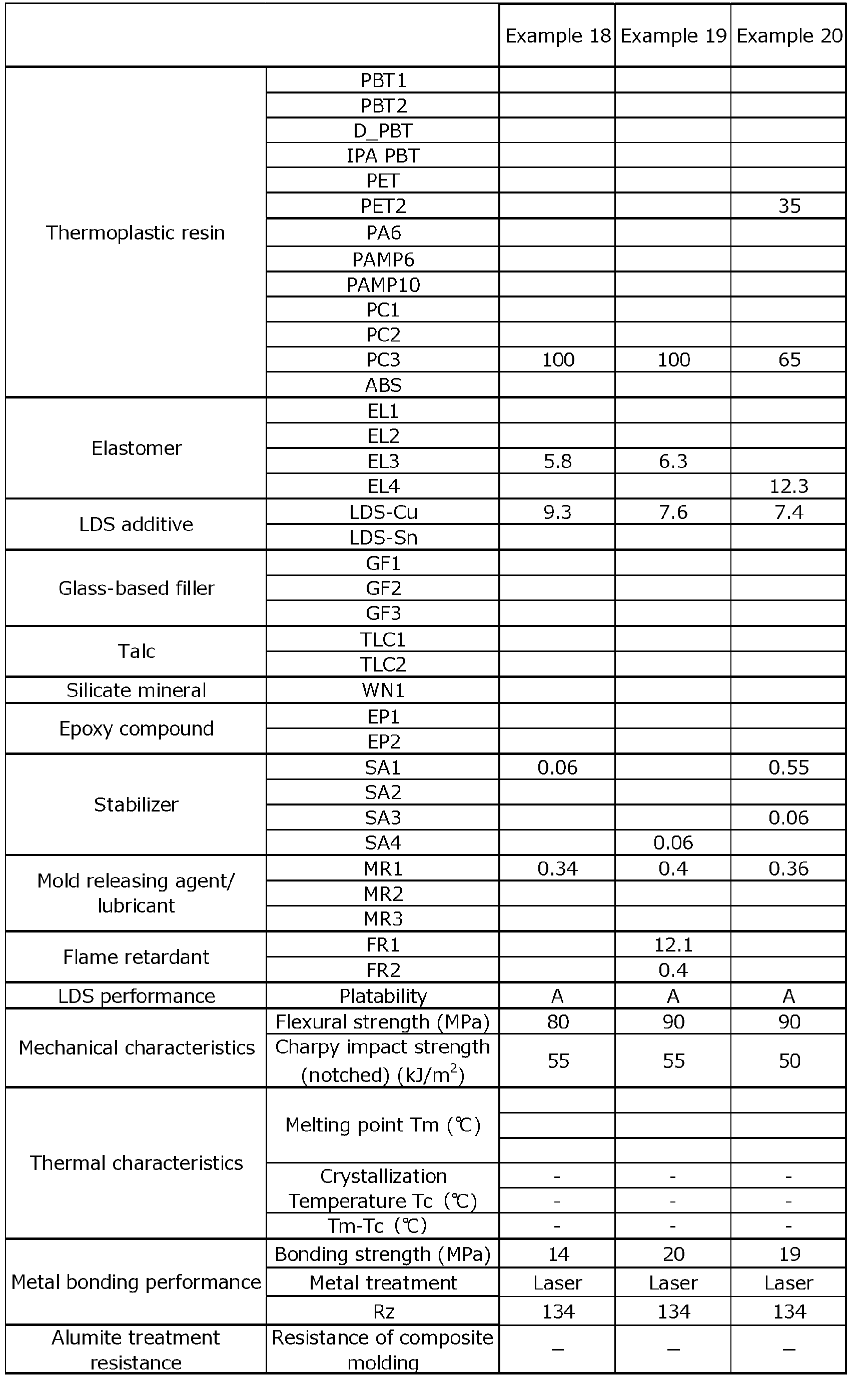

As clearly known from the results above, the metal-resin composites of this invention were found to show large bonding strength between the thermoplastic resin member and the metal member, and were found to be platable thereon (Examples 1 to 20). In particular, combined use of the polyester-based resin and the polyamide-based resin, as the thermoplastic resin, was found to yield the metal-resin composites that excel in alumite treatment resistance, while keeping higher levels of platability (Examples 5 to 13). In contrast, a case that employed chemical treatment, rather than laser processing (Reference Example 1), was found to show metal bonding strength considerably lower than Example 2 having the same resin composition. In case of absence of the LDS additive (Comparative Example 1), the composite was not plated at all.

### INDUSTRIAL APPLICABILITY

The metal-resin composite of this invention, having the thermoplastic resin member and the metal member tightly bound therein, and on which the plating layer can be formed, is suitably applicable as a material for electric/electronic components (housing, case, cover, etc.) for general home appliances, OA equipment (copying machine, printer, facsimile, etc.), various mobile terminals (mobile phone, etc.), and personal computer, vehicle parts for automobile (car-borne structural components, or brake pedal, etc.), and mechanical parts. In particular, the metal-resin composite is suitably used for vehicle engine control unit (ECU) for which mechanical strength is required.

### REFERENCE SIGNS LIST

- 1:: metal member
- 2:: thermoplastic resin member
- 3:: plating layer
- 4:: anodizing layer
- 10:: metal-resin composite
- 11:: laser irradiation
- 12:: recess

## Claims

1. A metal-resin composite comprising: a metal member having a laser-treated surface; and a thermoplastic resin member arranged in contact with the metal member on a side having the laser-treated surface,
the thermoplastic resin member being composed of a resin composition that contains 1 to 25 parts by mass of a laser direct structuring additive (B), per 100 parts by mass of a thermoplastic resin (A).

2. The metal-resin composite of Claim 1, wherein the thermoplastic resin contains 50% by mass or more of the polyester-based resin (A-1).

3. The metal-resin composite of Claim 1, wherein the thermoplastic resin (A) contains 50 to 85% by mass of the polyester-based resin (A-1), and 50 to 15% by mass of the polyamide-based resin (A-2).

4. The metal-resin composite of any one of Claims 1 to 3, wherein 40% by mass or more of thermoplastic resin is composed of a crystalline thermoplastic resin.

5. The metal-resin composite of Claim 4, wherein difference (Tm-Tc) between a melting point Tm and a crystallization temperature Tc of the resin composition is 20 to 60°C.

6. The metal-resin composite of any one of Claims 1 to 5, wherein the laser direct structuring additive (B) contains at least one of copper, antimony and tin.

7. The metal-resin composite of any one of Claims 1 to 6, further comprising a glass-based filler.

8. The metal-resin composite of any one of Claims 1 to 7, further comprising a plating layer on a surface of the thermoplastic resin member, and in an area not in contact with the metal member.

9. The metal-resin composite of any one of Claims 1 to 8, further comprising an anodizing layer on a surface of the metal member of the metal-resin composite.

10. The metal-resin composite of Claim 9, wherein the thermoplastic resin contains 55% by mass or more of the polyester-based resin (A-1).

11. The metal-resin composite of any one of Claims 1 to 10, further comprising a resist layer.

12. The metal-resin composite of any one of Claims 1 to 11, wherein the ten-point average roughness Rz on the face of the metal member is 40 to 300 µm.

13. A method for manufacturing a metal-resin composite, the method comprising:
treating upon laser to the surface on a metal member and forming a thermoplastic resin member, by applying on a laser-treated surface of the metal member a molten resin composition, the resin composition comprising 1 to 25 parts by mass of a laser direct structuring additive (B), per 100 parts by mass of a thermoplastic resin (A).

14. The method for manufacturing a metal-resin composite of Claim 13, wherein the step of applying the molten resin composition to the metal member is conducted by injection molding.

15. The method for manufacturing a metal-resin composite of Claim 13 or 14, further comprising forming a plating layer on a surface of the thermoplastic resin member.

16. The method for manufacturing a metal-resin composite of any one of Claims 13 to 15, further comprising anodizing.
